(19) Europäisches Patentamt
European Patent Office
Office européen des brevets

(11) **EP 2 266 370 B1**

(12) **FASCICULE DE BREVET EUROPEEN**

(45) Date de publication et mention
de la délivrance du brevet:
**14.11.2018 Bulletin 2018/46**

(51) Int Cl.:
***H05B 6/70*** *(2006.01)*

(21) Numéro de dépôt: **09726610.0**

(22) Date de dépôt: **19.03.2009**

(86) Numéro de dépôt international:
**PCT/FR2009/050457**

(87) Numéro de publication internationale:
**WO 2009/122101 (08.10.2009 Gazette 2009/41)**

(54) **DISPOSITIF D'APPLICATION D'ÉNERGIE ÉLECTROMAGNÉTIQUE À UN MILIEU RÉACTIF**

VORRICHTUNG ZUR ANWENDUNG VON ELEKTROMAGNETISCHEN ENERGIE AN REAKTIVEN MEDIEN

DEVICE FOR APPLYING ELECTROMAGNETIC ENERGY TO A REACTIVE MEDIUM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.03.2008 FR 0801541**

(43) Date de publication de la demande:
**29.12.2010 Bulletin 2010/52**

(73) Titulaire: **Sairem Societe Pour L'application Industrielle De La Recherche En Electronique Et Micro Ondes 01700 Neyron (FR)**

(72) Inventeurs:
• **GRANGE, André**
  **69480 Lachassagne (FR)**
• **JACOMINO, Jean-Marie**
  **69140 Rilleux-la-Pâpe (FR)**
• **GRANDEMENGE, Adrien**
  **69370 Saint-Didier au Mont d'Or (FR)**

(74) Mandataire: **Chevalier, Renaud Philippe et al Cabinet Germain & Maureau BP 6153 69466 Lyon Cedex 06 (FR)**

(56) Documents cités:
EP-B- 1 575 701          WO-A-00/15008
WO-A-2006/067579      DE-A1-102004 057 851
US-A1- 2006 011 563

**Description**

L'invention se rapporte à un dispositif d'application d'énergie électromagnétique à un milieu réactif, ledit dispositif étant destiné à être couplé à un générateur de rayonnement électromagnétique par l'intermédiaire de moyens de transmission dudit rayonnement.

Elle se rapporte également à un ensemble comprenant un tel dispositif d'application et un réacteur à l'intérieur duquel est disposé le milieu réactif. L'invention concerne aussi un appareil de traitement par rayonnement électromagnétique d'un milieu réactif comprenant un tel ensemble.

Ces appareils de traitement sont connus notamment comme appareil de traitement thermique d'un milieu réactif, où par « traitement thermique » on entend divers traitements effectués par chauffage tels qu'évaporation, séchage, grillage, extraction de produits naturels en suspension dans un solvant, réaction ou synthèse chimique avec chauffage par pertes diélectriques (en vue d'analyse ou de production de composés chimiques), déshydratation, cuisson, décoloration, désolidarisation, polymérisation, réticulation, traitements par fluides supercritiques, élimination de composés volatils etc. ainsi que divers traitements opérés simultanément au chauffage, tels que mélange ou broyage.

Pour de tels traitements thermiques, il est notamment connu d'utiliser des rayonnements électromagnétiques du type micro-ondes ou hautes fréquences. Le rayonnement électromagnétique micro-ondes concerne les ondes dont la fréquence est comprise entre environ 300 MHz et environ 30 GHz, préférentiellement entre 400 MHz et 10 GHz, et préférentiellement entre 915 MHz et 2.45 GHz. Le rayonnement électromagnétique hautes fréquences concerne les ondes dont la fréquence est comprise entre environ 100 KHz et environ 300 MHz, préférentiellement entre 13 MHz et 28 GHz.

De tels appareils de traitement trouvent des applications pour de nombreux types de milieux réactifs, qui font intervenir un seul réactif ou un mélange de réactifs en proportions variables, à l'état solide, liquide ou gazeux, avec ou sans catalyseurs, ledit milieu comprenant au moins un composant sensible au rayonnement. Le milieu réactif peut être du type solide (par exemple du type granuleux ou pulvérulent), gazeux, plasma, liquide (avec un solvant et/ou des solutés absorbant le rayonnement électromagnétique).

De manière connue, un appareil de traitement par rayonnement électromagnétique d'un milieu réactif comprend :

- un générateur de rayonnement électromagnétique comme un générateur d'ondes haute-fréquence ou un générateur de micro-ondes constitué par exemple et de façon non limitative d'un générateur à magnétron ou d'un générateur à semi-conducteurs ;
- un réacteur contenant ledit milieu réactif, où le réacteur peut prendre la forme d'un réservoir avec éventuellement des moyens de circulation dudit milieu réactif ; et
- un dispositif de transmission du rayonnement électromagnétique généré par le générateur au milieu réactif contenu dans ledit réacteur.

Ce dispositif de transmission comprend classiquement :

- des moyens de transmission du rayonnement électromagnétique disposés en sortie du générateur et couplés au dit réacteur afin de transmettre l'énergie électromagnétique au réacteur, ces moyens de transmission étant bien entendu adaptés au rayonnement électromagnétique et pouvant par exemple être constitués d'un câble de transmission, tel qu'un câble coaxial, ou d'un guide d'ondes classiquement utilisé dans le domaine des micro-ondes ;
- des moyens de couplage agencés pour permettre le transfert dans le milieu réactif de l'énergie électromagnétique issue des moyens de transmission.

En fonctionnement, le générateur génère un rayonnement électromagnétique à une fréquence donnée, le dispositif de transmission transmet le rayonnement électromagnétique généré au milieu réactif par l'intermédiaire des moyens de transmission et des moyens de couplage.

Les moyens de couplage comprennent généralement un dispositif d'application de l'énergie au milieu réactif, couramment appelé applicateur d'énergie, dont le choix dépend du rayonnement utilisé (hautes-fréquences et micro-ondes), des caractéristiques dimensionnelles du milieu à traiter et de son mode de traitement.

Pour les applicateurs hautes fréquences, sont notamment connus les applicateurs suivants :

- applicateurs capacitifs formés de deux armatures de condenseur entre lesquelles est appliquée la tension haute fréquence ;
- applicateurs inductifs pour le traitement de matériaux suffisamment conducteurs, ces applicateurs sont constitués d'un solénoïde alimenté en courant haute fréquence ;
- applicateurs à barreaux alternés pour matériaux relativement plans, constitués d'électrodes tubulaires ou en barres ;
- applicateurs à anneaux ou à boucles alter pour des matériaux filiformes formant les électrodes.

L'inconvénient majeur de ces applicateurs est qu'ils sont peu ou pas adaptés pour assurer un transfert d'énergie dans une masse liquide et d'une façon homogène.

Pour les applicateurs micro-ondes, sont connus notamment les applicateurs suivants :

- applicateurs à champ localisé type cavité monomode ;

- applicateurs à champ diffus type cavité multimodale ;
- applicateurs à champ proche type guide à antennes rayonnantes.

Concernant les applicateurs à champ localisé et à champ diffus, ils nécessitent un réacteur constitué au moins en partie d'un matériau transparent aux ondes c'est-à-dire n'absorbant pas les ondes, comme par exemple du polytétrafluoréthylène ou du quartz, qui est disposé à l'intérieur de la cavité de l'applicateur. Le réacteur contenant le milieu réactif est ainsi soumis à un rayonnement électromagnétique venant de l'extérieur.

L'applicateur à champ localisé, type monomode, est formé d'une cavité monomode, de dimension prédéterminée, résonnant à la fréquence d'émission selon un rayonnement dans le sens du guide d'ondes. Cette cavité monomode permet une distribution du champ électromagnétique relativement homogène à l'intérieur de la cavité. Néanmoins, avec ce type d'applicateur monomode, la quantité de matière à traiter est limitée par les dimensions de la cavité et donc du guide d'ondes. Pour une application industrielle, il est nécessaire de prévoir un appareillage complexe et coûteux comprenant plusieurs applicateurs monomodes mis en parallèles afin d'avoir un débit suffisant, ainsi qu'un système de circulation complexe du milieu réactif. En outre, l'énergie électromagnétique transférable est limitée par le volume à l'interface entre le produit à traiter et le rayonnement.

L'applicateur à champ diffus, type multimode, assure par contre une distribution non homogène du champ électromagnétique à l'intérieur de la cavité, avec la présence de points chauds. Une telle distribution limite le volume des échantillons à traiter dans les applicateurs types multimodes, et nécessite de surcroît une mise en mouvement ou une agitation de l'échantillon pour assurer une homogénéité du chauffage par micro-ondes.

Un inconvénient commun à ces deux applicateurs, type monomode ou type multimode, est qu'ils nécessitent des réacteurs en matériau adapté pour ne pas absorber les ondes. En plus d'être particulièrement complexes et coûteux à produire, ces réacteurs transparents aux ondes sont limités en taille et en forme, limitant ainsi le traitement par ondes à certaines réactions et à certains milieux réactifs, et excluant d'autres réactions où la forme et la longueur du réacteur peuvent avoir un rôle prépondérant. On remarque également que pour des réactions devant être conduites sous une pression élevée, indépendamment ou non du chauffage induit par le rayonnement électromagnétique , ces réacteurs transparents aux ondes résistent le plus souvent difficilement à des hautes pressions.

Les autres inconvénients communs à ces deux applicateurs, type monomode ou type multimode résultent de la difficulté d'obtenir un champ électrique constant dans le réacteur, et enfin du fait que la géométrie de la cavité est dépendante de la fréquence du rayonnement de sorte qu'un applicateur à champ localisé ne peut travailler qu'à une seule fréquence donnée.

Un dernier inconvénient de ces deux applicateurs, type monomode ou type multimode, est qu'ils ne sont pas compatibles avec un dispositif de régulation précise de la température d'échauffement du milieu réactif par l'emploi d'un fluide de refroidissement extérieur. En effet, pour réguler de façon précise et optimale une réaction, il est particulièrement avantageux qu'un liquide de refroidissement circule autour du réacteur dans la zone de chauffage. Si tel était le cas, les ondes chaufferaient le liquide de refroidissement, ce qui n'est clairement pas envisageable. Si le liquide de refroidissement circulait dans une conduite non transparente aux ondes, dans ce cas la conduite formerait un écran entre le rayonnement électromagnétique et le réacteur, limitant clairement l'exposition du milieu réactif au rayonnement et donc le rendement du chauffage. Ces applicateurs empêchent donc la régulation de la température dans la zone d'irradiation, c'est-à-dire dans la cavité, de sorte que la régulation de la température est parfois inefficace voire incompatible avec certaines réactions chimiques. C'est notamment le cas lorsqu'il est nécessaire de maintenir une basse température lors du traitement de matériaux d'origines biologiques qui peuvent se dégrader thermiquement après une irradiation par des ondes électromagnétiques.

Concernant les applicateurs à champ proche type guide à antennes rayonnantes, ils sont connus de l'art antérieur notamment de la demande de brevet européen n° EP 0 329 338 qui divulgue un appareil de traitement par micro-ondes de poudres céramiques dans un environnement sous haute pression. Cet appareil comporte un réacteur formant une cavité de résonnance sous haute-pression, à l'intérieur de laquelle le rayonnement micro-ondes est introduit par une antenne rectiligne qui s'étend en partie dans la cavité.

Un applicateur à champ proche est également décrit dans le document DE 10 2004 057 851 A1 qui divulgue le préambule de la revendication 1, où une antenne rectiligne, type antenne droite ou antenne bâton, est introduite directement à l'intérieur d'un réacteur, contenant un milieu gazeux, liquide ou solide. Un câble coaxial, comprenant un conducteur interne et un conducteur externe, est couplé au réacteur de la façon suivante : le conducteur externe est couplé à la paroi externe du réacteur, et le conducteur interne débouche dans le réacteur au niveau de la jonction câble coaxial/réacteur. La partie d'extrémité du conducteur interne constitue ainsi une antenne qui rayonne dans le milieu réactif qui s'échauffe par perte diélectrique. La longueur de l'antenne est supérieure à la longueur d'ondes du rayonnement.

La demande internationale WO 00/15008 décrit un applicateur à champ proche avec une antenne rayonnante. Cet appareil comprend un câble dont une première extrémité est connectée à un receveur pour recevoir les ondes générées par un générateur d'ondes, et dont une deuxième extrémité coopère avec un transmetteur pour transmettre les ondes dans le réacteur. Le câble peut être du type coaxial et le transmetteur correspond à une portion exposée d'un conducteur interne dudit câble coaxial. Cette portion exposée du conducteur interne est longue d'environ un quart de la longueur d'onde du rayonnement, et elle joue le rôle d'une antenne rectiligne rayonnante à l'intérieur d'un réacteur.

La demande internationale WO 2006/067579 décrit un applicateur à champ proche similaire à celui décrit dans la demande internationale WO 00/15008, avec une antenne rayonnante. Cette antenne présente à son extrémité libre une ou plusieurs portions exposées d'un conducteur interne qui rayonnent à l'intérieur d'un réacteur, l'effet du rayonnement est ainsi focalisé sur l'extrémité de l'antenne. Pour éviter les effets d'un rayonnement trop localisé et pour densifier la répartition de l'énergie, il est envisagé dans ce document l'utilisation de deux ou plusieurs antennes qui émettent des ondes en phases selon le principe de l'interférence des ondes électromagnétiques cohérentes. La mise en oeuvre de ce principe implique l'utilisation de techniques onéreuses, avec plusieurs antennes couplées au générateur d'ondes et avec un dispositif de contrôle de l'excitation en phase des antennes à partir d'un même générateur d'ondes.

La demande de brevet US 2006/0011563 A1 décrit un appareil utilisé dans la séparation d'un mélange, comme par exemple un mélange liquide ou une suspension colloïdale, où l'appareil comprend un ensemble rotor divisé intérieurement en une ou plusieurs chambres. Ce document divulgue le principe d'utiliser au moins un générateur de micro-ondes pour transmettre une énergie micro-onde dans la ou les chambres. Dans une première configuration, le ou les générateurs de micro-ondes sont positionnés à l'intérieur d'un arbre interne tubulaire s'étendant à l'intérieur de l'ensemble rotor où au moins une partie de l'arbre interne tubulaire est sensiblement transparente à l'énergie micro-onde. Ce document ne détaille pas la structure du générateur de micro-ondes et ne donne en outre aucun enseignement pour l'homme du métier sur la mise en oeuvre de ces moyens de génération de micro-ondes au sein de cet appareil de séparation, hormis une indication vague sur l'emploi d'une antenne sans plus de précision quant au choix et à l'emploi d'une telle antenne. Dans une seconde configuration, le ou les générateurs de micro-ondes comprennent un ou plusieurs guides d'ondes formés à l'intérieur de l'arbre interne tubulaire pour émettre un rayonnement micro-ondes dans la ou les chambres à travers des portions transparentes dudit arbre ; l'emploi de tels guides d'ondes ne fonctionnant pas pour générer des micro-ondes au sein d'un réacteur.

Les antennes rayonnantes résolvent une partie des inconvénients des applicateurs de type monomode ou multimode, notamment parce qu'elles permettent de transmettre le rayonnement directement à l'intérieur d'un réacteur, évitant ainsi d'employer un réacteur transparent aux ondes avec toutes les contraintes mentionnées ci-dessus.

Néanmoins, ces applicateurs avec antennes rectilignes rayonnantes présentent un certain nombre d'inconvénients. En premier lieu, l'énergie électromagnétique transmise au milieu et les fréquences utilisables sont limitées par les propriétés mêmes de l'antenne, à savoir que l'atténuation de l'onde dans une antenne dépend de la fréquence du rayonnement et des caractéristiques diélectriques du milieu réactif.

Un des principaux inconvénients des antennes rectilignes est la faible longueur de la partie rayonnante qui limite l'énergie transférable par un tel dispositif et entraîne des risques accrus de claquage diélectrique au niveau de l'interface entre l'antenne et le milieu réactif, la conséquence étant la formation d'arcs électriques tout à fait indésirables dans le cas du traitement de milieux inflammables ou explosifs.

En outre, un appareil de traitement thermique muni d'une antenne rectiligne rayonnante est limité à une seule fréquence donnée, fonction des dimensions de l'antenne, et est limité aux milieux réactifs diélectriques non conducteurs ayant une absorption ni trop importante ni trop faible. Inversement, la longueur de l'antenne est elle-même limitée par la fréquence du rayonnement et par le milieu réactif. Avec une telle antenne rayonnante, si la fréquence du rayonnement augmente, la longueur d'antenne rayonnant effectivement dans le milieu diminue également et de même l'énergie électromagnétique transmise au milieu diminue aussi.

Un tel appareil ne peut pas assurer un champ électrique constant dans le milieu.

De manière connue, une antenne est un dispositif pour rayonner des ondes électromagnétiques. De telles antennes ne rayonnent jamais de façon uniforme, c'est-à-dire de la même façon sur la longueur totale de l'antenne. En réalité, l'énergie rayonnée par une antenne est répartie inégalement dans l'espace ou dans un milieu confiné.

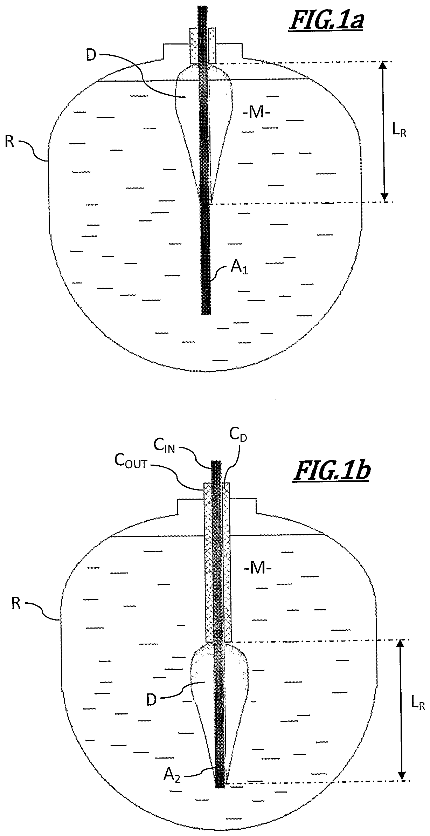

Ainsi, entre la partie ou l'antenne est exposée au milieu réactif, dite base de l'antenne, et son extrémité libre le rayonnement est atténué, autrement dit le diagramme de rayonnement est affaibli le long de l'antenne. Cette atténuation est illustrée aux figures 1a et 1b où une antenne rayonnante rectiligne, respectivement A1 et A2, est immergée dans un milieu réactif M. L'antenne rayonnante A1 illustrée en figure 1a s'étend sur toute sa longueur dans le réacteur R, ici composé d'un récipient rempli du milieu réactif M, tandis que l'antenne rayonnante A2 illustrée en figure 1b correspond à une portion d'extrémité d'un conducteur interne Cin d'un câble coaxial C qui a été dénudée ; le câble coaxial comprend un conducteur externe Cout, une couche de diélectrique Cd et le conducteur interne Cin, où le conducteur externe Cout et la couche de diélectrique Cd ont été retirés pour mettre à nu une portion de longueur du conducteur interne Cin qui forme ainsi l'antenne A2.

Les antennes A1 et A2 rayonnent une énergie électromagnétique dans le milieu M, le diagramme de rayonnement portant la référence D sur les figures. La vitesse de propagation et l'atténuation de l'onde dépendent des caractéristiques diélectriques du milieu. L'atténuation de l'onde peut varier d'un facteur un à mille selon les milieux réactionnels, par exemple l'eau va atténuer l'onde environ mille fois plus qu'un milieu très faiblement polaire comme par exemple l'hexane.

Dans la pratique, les constantes diélectriques peuvent être amenées à varier au cours d'une réaction chimique, au fur et à mesure que les réactifs se transforment en adoptant des caractéristiques diélectriques en évolution constante.

Suivant le milieu, la longueur rayonnante effective LR de l'antenne est plus ou moins longue à partir du point où l'antenne est exposée au milieu, de sorte que le rayonnement est très localisé. Dans un milieu assez homogène, comme par exemple du verre fondu, ou dans un milieu peu absorbant, la longueur rayonnante effective peut correspondre sensiblement à la longueur totale de l'antenne. Par contre, dans certains milieux, l'atténuation du rayonnement se produit relativement rapidement le long de l'antenne, correspondant ainsi à une longueur rayonnante effective LR très courte, dans certains cas limitée à quelques centimètres.

Ainsi, de telles antennes présentent l'inconvénient que le chauffage par perte diélectrique est plus ou moins homogène dans le milieu. En outre, le chauffage est plus ou moins bien réparti le long de l'antenne au cours d'une réaction où les constantes diélectriques évoluent.

En outre, ces antennes nécessitent généralement un blindage contre le rayonnement, en particulier lorsque le réacteur est du type transparent aux ondes, comme par exemple en verre ou en pyrex classiquement utilisé dans les laboratoires de chimie.

La présente invention a notamment pour but de résoudre tout ou partie de ces inconvénients, et consiste pour cela en un dispositif d'application selon la revendication 1.

Ainsi, l'invention permet d'avoir le contrôle du profil de répartition de la densité d'énergie électromagnétique, en adaptant la ligne de transmission à pertes en fonction du milieu traité, des réactions souhaitées, des zones au niveau desquelles on souhaite appliquer ou non une quantité prédéterminée d'énergie électromagnétique. L'invention permet par exemple d'obtenir un tel profil sensiblement constant le long de la ligne, de sorte que l'application de l'énergie est sensiblement homogène tout le long de cette ligne, ce qui permet notamment d'envisager l'application dans des réacteurs de types tubulaires, par exemple de type rectiligne ou sinueux, avec une application sensiblement égale de l'énergie électromagnétique tout le long du réacteur.

Une telle ligne de transmission à pertes est bien plus avantageuse qu'une antenne qui rayonne sans aucun contrôle sur l'atténuation, et ainsi sans aucun contrôle sur les zones du milieu réactionnel que l'on souhaite soumettre aux effets d'un rayonnement électromagnétique.

En outre, un tel dispositif d'application permet d'obtenir avec une seule ligne de transmission à pertes un profil donné de répartition de la densité d'énergie électromagnétique, comme un profil uniforme correspondant à une application homogène de l'énergie tout le long de la ligne.

Le dispositif d'application permet aussi d'avoir un profil donné de répartition de la densité d'énergie électromagnétique qui s'étend entre le début de la ligne de transmission à pertes et le bout de la ligne de transmission à pertes. Avec une antenne où seule une portion d'extrémité rayonne, le profil de répartition de la densité d'énergie ne débute qu'à partir cette portion exposée. Avec une antenne complètement exposée, le profil de répartition de la densité d'énergie débute en début de ligne pour être complètement atténué avant le bout de ligne. Dans les deux cas, une antenne ne permet pas d'avoir un profil de répartition de la densité d'énergie tout le long de l'antenne.

Une ligne de transmission à pertes est couplée au milieu réactif afin d'appliquer l'énergie électromagnétique au milieu réactif, et c'est en jouant tout le long de la ligne sur ce couplage ou sur cette interface de transfert que l'on peu contrôler le profil de répartition susmentionné.

De plus, contrairement aux dispositifs à antenne, le dispositif d'application avec une ligne de transmission à pertes peut être utilisé avec des fréquences faibles voire très faibles. Cette dernière caractéristique et le fait que la surface de rayonnement peut être très importante, ce qui permet au dispositif d'application avec une ligne de transmission à pertes d'être adapté dans la cas de rayonnements selon des puissances transmises pratiquement sans limitation. La seule limitation au niveau de puissance étant les performances des générateurs de rayonnement électromagnétique.

Un autre intérêt du dispositif d'application avec une ligne de transmission à pertes réside dans la possibilité de transférer de l'énergie dans les milieux les plus divers, y compris dans les milieux ioniques ce qui n'est pas le cas des dispositifs à antenne.

L'interface de transfert de la ligne de transmission est distincte entre au moins une première et une deuxième section transversale de ladite ligne, de l'énergie électromagnétique étant délivrée au milieu à chacune des ces sections transversales.

Par section transversale on entend une section de la ligne de transmission à pertes dans un plan sensiblement normal à l'axe longitudinal de ladite ligne. Ainsi, en différentes sections transversales de la ligne de transmission, le couplage entre la ligne et le milieu et donc l'interface de transfert avec le milieu sont différents ; le couplage ou l'interface de transfert étant bien entendu non nuls au niveau de ces sections transversales, c'est-à-dire que la ligne de transmission à pertes délivre de l'énergie électromagnétique au niveau de ces sections transversales.

Ainsi, le transfert de l'énergie peut se faire tout le long de la ligne de façon contrôlée, et non de façon inhomogène et diffuse comme c'est le cas avec une antenne rayonnante où l'interface de transfert est la même tout le long de l'antenne, c'est-à-dire que quelque soit la section transversale de l'antenne l'interface de transfert reste identique.

Dans un mode de réalisation, l'interface de transfert de la ligne de transmission à pertes varie de façon continue, notamment de façon régulière, ou de façon discontinue, notamment par paliers, entre la première et la deuxième section transversale.

Selon une caractéristique, l'interface de transfert de la ligne de transmission à pertes augmente entre la première section transversale qui est située en début de la ligne de transmission à pertes, et la deuxième section transversale qui est située en bout de la ligne de transmission à pertes.

Ainsi, le couplage entre la ligne de transmission à pertes et le milieu augmente entre le début et le bout de ligne, permettant par exemple d'avoir un profil de répartition de la densité d'énergie délivré au milieu sensiblement uniforme le long de ladite ligne.

En début de ligne, au niveau de la première section transversale, le couplage et donc l'interface de transfert sont prévus pour que le milieu réactif consomme un pourcentage x d'un total T d'énergie électromagnétique entrant en début de ligne. Donc, une quantité Q1 d'énergie est transférée au milieu réactif au niveau de cette première section transversale, ou une quantité Q1 d'énergie est consommée par le milieu réactif au niveau de cette première section transversale, où :

$$Q1 = x\% \ T$$

En bout de ligne, au niveau de la deuxième section transversale, le couplage et donc l'interface de transfert sont prévus pour que le milieu réactif consomme un pourcentage y de l'énergie électromagnétique restante R en bout de ligne. En négligeant l'atténuation intrinsèque de l'onde le long de la ligne de transmission à perte, et en supposant que ladite ligne de transmission à pertes est couplée au milieu réactif uniquement au niveau de la première et de la deuxième section transversale, on a la relation suivante :

$$R = T - Q1 = (100\text{-}x)\% \ T.$$

Ainsi, la quantité Q2 d'énergie transférée au milieu réactif au niveau de cette deuxième section transversale, ou la quantité Q2 d'énergie consommée par le milieu réactif au niveau de cette deuxième section transversale, est la suivante :

$$Q2 = y\% \ R.$$

Pour que l'énergie transférée entre la ligne de transmission à pertes et le milieu soit quasiment identique entre les deux sections, correspondant à la relation Q1 = Q2, le couplage entre la ligne et le milieu doit être plus grand au niveau de la deuxième section transversale par rapport à la première section transversale, c'est-à-dire l'interface de transfert doit être supérieure au niveau de la deuxième section transversale par rapport à la première section transversale, afin que le pourcentage y soit au moins supérieur au pourcentage x ; le but étant de compenser le fait que de l'énergie est consommée en début de ligne conduisant à une atténuation du signal le long de la ligne.

Selon une réalisation particulière, la ligne de transmission à pertes présente une géométrie adaptée au profil souhaité de répartition de la densité d'énergie électromagnétique délivrée audit milieu, notamment une géométrie transversale variable sur toute la longueur de la ligne.

La géométrie peut ainsi être adaptée à :

- tous les types de réacteurs, comme les réacteurs continus, les réacteurs discontinus ou « batch », les réacteurs rectilignes, les réacteurs sinueux, les réacteurs à faible ou grand volume réactionnel, les réacteurs sous dépression ou sous pression par exemple de type autoclave ; et/ou
- tous les milieux réactifs, peu importe les constantes diélectriques du milieu réactif ; et/ou
- toutes les fréquences, de quelques Hz à plusieurs GHz.

Il est bien entendu dans l'ensemble de la description qu'une ligne de transmission à pertes comprend au moins un premier et un deuxième conducteurs électriques isolés au moins partiellement l'un de l'autre au moyen d'un isolant présentant des caractéristiques diélectriques adaptées, le premier conducteur étant destiné à être couplé d'une part au générateur et d'autre part au milieu réactif afin de permettre l'application de l'énergie électromagnétique générée audit milieu réactif selon le profil prédéterminé de répartition de la densité d'énergie électromagnétique.

Ainsi, le contrôle du couplage entre le premier conducteur et le milieu assure le contrôle du profil de répartition de la densité d'énergie électromagnétique. On peut ainsi augmenter le couplage en bout de ligne par rapport au début de ligne, afin de compenser l'atténuation de l'onde (du champ électrique) le long de la ligne due à la consommation d'énergie par le milieu entre le début et le bout de ligne, et ainsi d'appliquer autant d'énergie en début qu'en bout de ligne.

Concernant le deuxième conducteur, il peut être destiné à s'étendre à l'intérieur d'un réacteur dans lequel est disposé ledit milieu réactif, autrement dit à être plongé dans ledit réacteur.

Selon une caractéristique, le milieu réactif est disposé autour dudit deuxième conducteur, l'isolant étant constitué d'un matériau diélectrique adapté, par exemple de la silice, de l'alumine, des céramiques, du polytétrafluoréthylène etc.

Une telle ligne de transmission à pertes serait obtenue à partir d'une ligne de transmission classique, c'est-à-dire sans perte, notamment une ligne non dispersive où la vitesse de propagation des ondes est indépendante de la fréquence. Cette ligne de transmission est modifiée, comme décrit ultérieurement en créant des zones de pertes par coupage avec le milieu extérieur, pour obtenir une ligne de transmission à pertes conforme à l'invention. Avec une telle ligne de transmission à pertes, il est possible de transférer l'énergie électromagnétique sur une longueur quelconque de la ligne, permettant ainsi d'augmenter la surface de transfert de l'énergie électromagnétique au milieu réactif et ainsi l'énergie électromagnétique transférée avec un seul applicateur.

Selon une variante, le milieu réactif peut être disposé au moins partiellement entre le premier et le deuxième conducteur, l'isolant étant composé au moins en partie du milieu réactif.

Selon une autre variante, le deuxième conducteur forme la paroi d'un réacteur à l'intérieur duquel est disposé ledit milieu réactif, et l'isolant diélectrique est composé au moins en partie du milieu réactif.

Dans les cas précédents, le deuxième conducteur forme un écran entre le rayonnement issu du premier conducteur et l'extérieur du réacteur, permettant avantageusement de se prémunir de tout rayonnement vers l'extérieur du réacteur. A la différence d'un applicateur avec antenne rayonnante de l'état de la technique, il est donc inutile de prévoir un écran supplémentaire autour de l'antenne ou autour du réacteur ; ceci venant du fait que deux phénomènes distincts sont en jeu : avec l'antenne on est face à un rayonnement hétérogène le long de l'antenne, tandis qu'avec une ligne de transmission à pertes on est face à une propagation d'une onde entre deux conducteurs, cette propagation s'effectuant dans un isolant qui peut être en tout ou en partie le milieu réactif, et cette ligne perdant de l'énergie dans le milieu extérieur par un couplage adéquat entre le premier conducteur et ledit milieu réactif.

Dans un autre mode de réalisation, le deuxième conducteur présente une géométrie transversale variable le long de la ligne afin d'obtenir une interface de transfert variable entre le premier conducteur et le milieu réactif, et donc un couplage variable entre ledit premier conducteur et le milieu réactif.

Par exemple, le deuxième conducteur est constitué de deux bandes de conduction disposées en parallèles de part et d'autre du premier conducteur, la section transversale des dites bandes, et notamment leur largeur, variant le long de la ligne. Dans cet exemple, la ligne de transmission à pertes est obtenue à partir d'une ligne de transmission du type connu « strip-line ».

Dans un autre exemple, le deuxième conducteur est constitué d'un profilé tubulaire entourant le premier conducteur et dans lequel est pratiqué au moins un évidement, les dimensions transversales de la partie évidée du deuxième conducteur étant distinctes entre au moins deux sections transversales de la ligne. Dans cet exemple, la ligne de transmission à pertes est obtenue à partir d'une ligne de transmission du type câble coaxial.

Avantageusement, au moins deux évidements de forme allongée sont pratiqués dans le deuxième conducteur, lesdits évidements étant d'inclinaison distincte par rapport à l'axe longitudinal de la ligne de transmission à pertes, notamment avec un premier évidement en début de la ligne de transmission à perte sensiblement parallèle audit axe longitudinal et avec un deuxième évidement en bout de la ligne de transmission à perte sensiblement perpendiculaire audit axe longitudinal. Ainsi, l'inclinaison des évidements varie le long de la ligne.

Pour la suite, les évidements sont décrits comme étant sous la forme de fentes, bien qu'ils ne soient pas limités à cette forme particulière. L'inclinaison des fentes allongées par rapport à l'axe longitudinal de la ligne peut ainsi diminuer le long de la ligne, de sorte que les fentes allongées situés en début de ligne sont sensiblement parallèles audit axe longitudinal et les fentes allongées situés en bout de ligne sont sensiblement perpendiculaires audit axe longitudinal. Ainsi, les fentes perpendiculaires en bout de ligne présentent un couplage avec le milieu extérieur qui est supérieur au couplage des fentes parallèles, afin de compenser l'atténuation de l'onde le long de la ligne, due à la consommation d'énergie par le milieu entre le début et le bout de ligne, et d'obtenir au final une répartition homogène de l'énergie électromagnétique transmise au milieu réactif.

Une section transversale de la ligne au niveau de la première fente parallèle à l'axe longitudinal présente une interface de transfert avec le milieu de dimension égale à la largeur de la fente ; tandis qu'une section transversale de la ligne au niveau de la deuxième fente perpendiculaire à l'axe longitudinal présente une interface de transfert avec le milieu de dimension égale à la longueur de la fente. Ainsi, l'interface de transfert et donc le couplage avec le milieu sont supérieurs au niveau de la deuxième fente par rapport à la première fente.

Dans un mode de réalisation particulier, le premier conducteur présente une géométrie transversale variable le long de la ligne afin d'obtenir une interface de transfert variable entre le premier conducteur et le milieu réactif, et donc un couplage variable entre le premier conducteur et le milieu réactif.

Avantageusement, le premier conducteur est de section transversale croissante entre le début et le bout de la ligne de transmission à pertes, notamment de façon continue avec un premier conducteur de forme générale tronconique ou de façon discontinue avec un premier conducteur comportant des paliers de section croissante. On entend par section croissante le fait que le contour de la section transversale augmente entre le début et le bout de ligne, afin encore une fois que le bout de ligne présente un couplage avec le milieu extérieur qui soit supérieur au couplage du début de ligne, pour compenser la consommation d'énergie le long de la ligne et obtenir au final une répartition homogène de l'énergie électromagnétique transmise au milieu réactif. En effet, le couplage augmente avec le contour de la section car les dimensions de la ligne de transfert entre le premier conducteur et le milieu extérieur augmente.

Selon un autre mode de réalisation, l'isolant comporte un manchon en matériau diélectrique entourant ledit premier conducteur, ledit manchon étant de géométrie transversale variable afin d'obtenir une interface de transfert variable entre le premier conducteur et le milieu réactif.

Dans ce mode de réalisation, on joue sur la géométrie du manchon en matériau diélectrique pour contrôler le couplage entre le premier conducteur et le milieu réactif.

Par exemple, le manchon est de section transversale décroissante entre le début et le bout de la ligne de transmission à pertes ; cette section transversale du manchon pouvant décroître de façon continue, en présentant par exemple une forme tronconique, ou discontinue, en présentant par exemple une forme avec des paliers de section croissante. Ainsi, plus la section transversale du manchon en matériau diélectrique est petite, et plus le milieu réactif est proche du premier conducteur, et donc plus le couplage est élevé. Autrement dit, l'interface de transfert entre le premier conducteur et le milieu réactif augmente avec la diminution de l'épaisseur du manchon.

Dans une réalisation particulière, le dispositif d'application comprend au moins un canal de circulation du milieu réactif entourant le premier conducteur de ladite ligne de transmission à pertes sur toute ou partie de ladite ligne, ledit canal de circulation étant au moins partiellement transparent au rayonnement électromagnétique.

Ce canal de circulation participe au couplage entre la ligne de transmission à pertes et le milieu réactif qu'il conduit.

Ainsi, la distance entre ledit canal et ledit premier conducteur peut varier le long dudit premier conducteur afin de contrôler l'interface de transfert entre le premier conducteur et le milieu réactif, et donc le couplage dudit premier conducteur avec le milieu réactif. En effet, le canal peut être plus ou moins proche de la ligne de transmission à pertes afin que le milieu réactif soit plus ou moins couplé à ladite ligne de transmission à pertes et reçoive en conséquence plus ou moins d'énergie électromagnétique.

Sur le même principe mais cette fois appliqué à la surface d'exposition du milieu réactif au rayonnement électromagnétique, la section transversale du canal de circulation peut varier le long dudit premier conducteur afin de contrôler l'interface de transfert entre le premier conducteur et le milieu réactif, et donc le couplage dudit premier conducteur avec le milieu réactif.

Toujours sur ce principe mais cette fois appliqué à la disposition du canal le long de la ligne de transmission à pertes, la densité surfacique du canal de circulation peut varier le long dudit premier conducteur afin de contrôler l'interface de transfert entre le premier conducteur et le milieu réactif, et donc le couplage dudit premier conducteur avec le milieu réactif. Il est entendu par là que suivant l'endroit où l'on se trouve le long de la ligne, le canal présente une surface de contact plus ou moins élevé, et ce indépendamment de la section même du canal. Par exemple, dans le cas d'un tube en spirale de section constante formant ledit canal, une densité surfacique correspond sensiblement au nombre de spires du tube par unité de longueur. Ainsi, le nombre de spires sur une portion de longueur de la ligne de transmission à pertes peut être différent du nombre de spires sur une autre portion de longueur de la ligne de transmission à pertes, correspondant ainsi à deux densités surfaciques distinctes.

Dans une réalisation particulière du canal, le canal de circulation comprend au moins un tube creux en forme générale de spirale.

Selon une caractéristique, le pas dudit tube varie le long de la ligne de transmission à pertes, notamment dans le sens d'une réduction du pas en direction du bout de ligne, correspondant ainsi à une variation de la densité surfacique comme décrit ci-dessus.

Selon une autre caractéristique, le diamètre dudit tube varie le long de la ligne de transmission à pertes, notamment dans le sens d'une augmentation dudit diamètre en direction du bout de ligne

Dans une autre réalisation particulière du canal, le canal de circulation est délimité en partie par une rainure en spirale ménagée sur la face externe d'un corps creux entourant le premier conducteur.

Selon une caractéristique, le pas de ladite rainure varie le long de la ligne, notamment dans le sens d'une réduction du pas en direction du bout de ligne.

Selon une autre caractéristique, la profondeur de la rainure varie le long de la ligne de transmission à pertes, notamment dans le sens d'une augmentation de ladite profondeur en direction du bout de ligne.

L'invention se rapporte également à un ensemble comprenant un dispositif d'application d'énergie électromagnétique à un milieu réactif et un réacteur à l'intérieur duquel est disposé ledit milieu réactif, où ledit dispositif d'application s'étendant au moins partiellement à l'intérieur dudit réacteur est tel que décrit ci-dessus.

De manière générale, le réacteur comporte une cavité contenant ledit milieu réactif, ladite ligne de transmission à pertes s'étendant à l'intérieur de ladite cavité.

Cette cavité peut recueillir directement le milieu réactif, qui est sous forme solide, liquide ou gazeux, et former par exemple un réacteur discontinu ou « batch ».

Le réacteur peut comprendre des moyens de circulation dudit milieu entre une entrée et une sortie dudit réacteur, afin de former un réacteur continu. Les moyens de circulation peuvent comprendre au moins un canal de circulation tel que décrit ci-dessus, comme par exemple le tube en spirale ou le corps creux avec des rainures, ledit canal s'étendant à l'intérieur dudit réacteur. Dans le cas du corps creux avec des rainures, le canal de circulation est également délimité par une face interne du réacteur, le corps creux étant monté avec un jeu très faible dans ledit réacteur.

Selon une caractéristique, l'ensemble comprend des moyens d'agitation dudit milieu réactif à l'intérieur dudit réacteur.

Dans une réalisation des moyens d'agitation, ceux-ci comprennent au moins une hélice disposée dans ledit réacteur et mobile en rotation. L'axe de symétrie de l'hélice est avantageusement parallèle, voire confondue, avec l'axe longitudinal de la ligne de transmission à perte ; l'hélice s'étendant autour du premier conducteur de la ligne de transmission à pertes. L'hélice est entraînée en rotation notamment au moyen d'un moteur rotatif disposée à l'une des extrémités du réacteur, à l'extérieur de celui-ci.

Dans une autre réalisation des moyens d'agitation, ceux-ci comprennent un agitateur mobile en rotation plongé dans le milieu réactif et s'étendant à côté ou en parallèle de la ligne de transmission à pertes.

Selon une autre caractéristique, l'ensemble comprend des moyens de régulation de la température dudit milieu. Ces moyens de régulation peuvent être formés d'une double enveloppe entourant au moins partiellement ledit réacteur et à l'intérieur de laquelle circule un fluide de refroidissement ou de réchauffage.

Ainsi, le réacteur présente une double enveloppe à l'intérieur de laquelle peut circuler un fluide caloporteur afin de maintenir le milieu réactif à une température donnée et plus largement afin de contrôler la température dudit milieu. Les moyens de régulation peuvent limiter la température du milieu, notamment en cas d'emballement thermique à l'intérieur du réacteur ou de réactions comportant une phase exothermique, en faisant circuler un fluide de refroidissement dans la double enveloppe, comme par exemple des fluides de réfrigération ou des fluides cryogéniques.

La double enveloppe permet également l'utilisation d'un fluide cryogénique pour traiter des molécules fragiles lors du traitement de matériaux d'origines biologiques. Il est notamment connu que certaines protéines peuvent subir des dégradations à des températures inférieures à 50°C alors que l'irradiation de matrices biologiques par un rayonnement électromagnétique peut favoriser l'extraction de protéines à partir de matériaux d'origines biologiques.

En outre, les dimensions de la double enveloppe peuvent être adaptées pour avoir une surface d'échange thermique plus ou moins grande par rapport au volume du milieu réactif traité et selon les effets recherchés.

Selon une autre caractéristique, l'ensemble comprend des moyens de mise sous pression de ladite cavité, afin que les réactions puissent s'effectuer sous une pression donnée.

Dans un mode de réalisation du réacteur, celui-ci est de forme générale rectiligne, par exemple en forme générale de tube droit à section cylindrique, et alors la ligne de transmission à pertes est également de forme générale rectiligne.

Dans un autre mode de réalisation du réacteur, celui-ci est de forme générale sinueuse, par exemple avec au moins deux tronçons rectilignes parallèles entre eux et reliés par un coude à 180°, et alors la ligne de transmission à pertes est également de forme générale sinueuse.

L'intérêt d'un réacteur sinueux est d'avoir un long trajet de circulation du milieu réactif, sans pour autant avoir un réacteur de trop grande longueur, particulièrement adapté pour des réactions dans un milieu peu absorbant aux ondes.

Dans les différents modes de réalisation du réacteur, le plus important est que la ligne de transmission à pertes s'adapte à la forme du réacteur, et de sa cavité, afin de permettre une répartition contrôlée, par exemple homogène, de l'énergie électromagnétique transmise au milieu réactif. Une telle adaptation de forme n'est bien entendu pas envisageable avec les antennes rayonnantes de l'état de la technique.

L'invention se rapporte également à un appareil de traitement par rayonnement électromagnétique d'un milieu réactif comprenant un générateur de rayonnement électromagnétique, des moyens de transmission dudit rayonnement électromagnétique, et un ensemble tel que décrit ci-dessus où le dispositif d'application est couplé audit générateur par l'intermédiaire desdits moyens de transmission.

Selon une caractéristique avantageuse, l'appareil comprend des moyens d'adaptation des impédances entre le générateur, les moyens de transmission et le dispositif d'application, afin d'optimiser le transfert d'énergie généré par le générateur au milieu réactif.

L'adaptation idéale correspond au cas la puissance émise par le générateur est égale à la puissance transférée au milieu réactif au niveau de l'interface avec la ligne de transmission à pertes, qui est elle-même égale à la puissance consommée par le milieu réactif. Pour éviter des retours d'ondes indésirables et avoir une adaptation des impédances en continu, la ligne de transmission à pertes devra avoir préférentiellement une impédance définie qui sera ajustée constamment grâce à un système automatique situé au niveau des moyens de transmission et décrit ci-dessous. De façon avantageuse, l'impédance de la ligne de transmission à pertes sera d'environ 50 Ohms.

Dans un premier mode de réalisation, le rayonnement électromagnétique est du type micro-ondes.

Dans ce cas, les moyens de transmission comprennent un guide d'ondes.

Selon une caractéristique, le guide d'ondes est en communication avec une cavité de couplage à l'intérieur de laquelle s'étend le premier conducteur de la ligne de transmission à pertes afin de permettre le couplage entre ledit premier conducteur et ledit guide d'ondes. Ainsi, le couplage s'effectue simplement par irradiation du premier conducteur par le rayonnement guidé directement jusqu'à lui par le guide d'ondes.

Selon une autre caractéristique, l'appareil comprend un manchon creux délimitant un espace à l'intérieur duquel d'une part s'étend le premier conducteur et d'autre part est mobile en translation un piston de court-circuit, ledit espace étant attenant à ladite cavité de couplage. Le piston de court-circuit coulisse autour de l'extrémité du premier conducteur opposé au réacteur. Le manchon creux et le premier conducteur définissent ainsi un tronçon de ligne de transmission coaxiale.

Ce piston de court-circuit permet d'ajuster l'impédance de la ligne de transmission à pertes, comme décrit ci-dessus, et participe ainsi à l'adaptation d'impédance désirée pour une optimisation du transfert d'énergie. L'ajustement se fait simplement à l'aide d'une tige solidaire du piston et traversant le manchon à travers une fente, il suffit alors de déplacer la tige dans la fente ajuster la position du piston et assurer l'adaptation. Ce déplacement du piston peut être motorisé, afin de permettre une adaptation automatique et en continue.

Dans ce premier mode de réalisation, les moyens d'adaptation comprennent un premier organe d'adaptation, tel qu'un piston de court-circuit, mobile en translation dans le guide d'ondes, et un deuxième organe d'adaptation, tel qu'un iris de couplage variable, également mobile en translation dans le guide d'ondes. Les premier et deuxième organes d'adaptation sont disposés dans le guide d'onde de part et d'autre du réacteur, et ainsi de part et d'autre du dispositif d'application.

Ces deux organes mobiles d'adaptation permettent d'optimiser le transfert d'énergie entre le guide d'ondes et la ligne de transmission à pertes. Le déplacement de ces deux organes mobiles d'adaptation peut également être motorisé, afin de permettre une adaptation automatique et en continue.

Dans un deuxième mode de réalisation, le rayonnement électromagnétique est du type hautes fréquences.

Dans ce cas, les moyens de transmission peuvent comprendre un câble de transmission, notamment du type câble coaxial, branché en sortie du générateur de rayonnement à hautes fréquences.

Selon une caractéristique, les moyens d'adaptation comprennent un système d'adaptation électrique placé en série sur ledit câble de transmission.

Ce système d'adaptation électrique peut être du type connu, avec par exemple une self et une première capacité variable en série sur le câble de transmission, et une deuxième capacité variable disposée en parallèle entre le câble de transmission et un potentiel de référence.

L'appareil selon l'invention peut ainsi constituer un appareil de traitement thermique d'un milieu réactif pour réaliser des réactions chimiques données par application d'une énergie électromagnétique selon un profil de répartition de la densité d'énergie électromagnétique délivrée le long de la ligne de transmission à pertes, ledit profil étant choisi en fonction des réactions chimiques souhaitées.

L'appareil selon l'invention peut être utilisé en tant qu'appareil d'extraction de substances d'origines biologiques, notamment des substances d'origines végétales ou animales ou de micro-organismes, par application d'une énergie électromagnétique à un milieu réactif contenant des matériaux d'origines biologiques, notamment des matériaux d'origines végétales ou animales ou de micro-organismes, en suspension dans au moins un solvant ; le solvant pouvant être du type aqueux comme de l'eau, et le solvant pouvant être transparent ou pas au rayonnement électromagnétique.

Par exemple, l'appareil peut être employé pour extraire toute substance d'origines biologiques, comme par exemple d'origines végétales, animales ou issues des ressources des biotechnologies.

Pour l'extraction de molécules d'origines biologiques, il est particulièrement important de pouvoir utiliser des moyens de régulation précis de la température, et plus particulièrement de limitation de la température, lors d'une irradiation par des ondes électromagnétiques des matériaux biologiques en phase aqueuse ou en suspension dans des solvants. Selon une réalisation particulière de l'invention, la double enveloppe peut présenter une surface d'échange thermique plus ou moins importante par rapport au volume irradié afin d'éviter la dégradation thermique des substances sensibles, immédiatement après l'extraction de leurs matrices biologiques. La double enveloppe permet par exemple l'emploi de fluides cryogéniques afin de réaliser des réactions ou des extractions à basses températures en appliquant des densités d'énergie électromagnétique élevées.

L'appareil selon l'invention est ainsi particulièrement adapté à de telles applications d'extraction de substances d'origines biologiques, car l'invention permet de transférer de l'énergie électromagnétique à l'intérieur d'une enceinte métallique à double enveloppe offrant une grande surface d'échange thermique par rapport aux volumes traités.

D'autres caractéristiques et avantages de la présente invention apparaîtront à la lecture de la description détaillée ci-après, d'un exemple de mise en oeuvre non limitatif, faite en référence aux figures annexées dans lesquelles :

- les figures 1a et 1b sont des vues schématique d'applicateurs à champ proche avec une antenne rayonnante du type connue ;
- la figure 2 est une vue schématique d'une ligne de transmission ;
- les figures 3a et 3b sont des diagrammes illustrant la propagation d'une onde dans respectivement une ligne de transmission idéale sans perte et une ligne de transmission à pertes ;
- les figures 4a à 4e sont des vues en section transversale de lignes de transmission du type connu ;
- les figures 5a et 5b sont des vues schématiques d'une ligne de transmission à pertes selon l'invention s'étendant respectivement dans un réacteur continu et un réacteur discontinu ;

- les figures 6a à 6d sont des vues en section transversale de respectivement une ligne de transmission type « strip line » (figure 6a) et plusieurs sections d'une ligne de transmission à pertes (figures 6b à 6d) obtenues par modification de la ligne de transmission illustrée en figure 6a ;

- la figure 6e est une vue en perspective d'une ligne de transmission à pertes de section continue correspondant à la section illustré en figure 6c ;

- les figures 7a et 7b sont des vues d'une ligne de transmission type câble coaxial respectivement en section transversale et en perspective ;

- les figures 8a, 8b et 8c sont des vues d'une ligne de transmission à pertes respectivement en une première et une deuxième section transversale et en perspective, obtenue par modification de la ligne de transmission illustré aux figures 7a et 7b ;

- la figure 9a est une vue en perspective d'un ensemble réacteur discontinu et dispositif d'application selon l'invention, où est également illustrée une partie d'un guide d'ondes couplé au dispositif d'application ;

- les figures 9b et 9c sont des vues en coupe médiane de l'ensemble illustré en figure 9a et comportant respectivement un premier et un deuxième mode de réalisation d'un dispositif d'application selon l'invention

- la figure 10 est une vue schématique d'un autre réacteur discontinu avec un dispositif d'application selon l'invention ;

- les figures 11a et 11b sont des vues schématiques illustrant un appareil de traitement selon l'invention, respectivement par application d'un rayonnement type micro-ondes (figure 11a) et hautes fréquences (figure 11b) ;

- la figure 12 est une vue schématique d'un réacteur continu sinueux avec une ligne de transmission à pertes sinueuse ;

- les figures 13a et 13b sont des vues respectivement en coupe longitudinale et transversale d'un réacteur continu plat avec une ligne de transmission à pertes séparant l'intérieur dudit réacteur en un canal supérieur et inférieur de circulation du milieu réactif ;

- la figure 14 est une vue en perspective d'un appareil de traitement par rayonnement micro-ondes conforme à l'invention ;

- les figures 15b à 15c sont des vues en perspective différentes de réacteurs continus couplés avec un guide d'ondes adaptés pour un appareil conforme à l'invention ;

- la figure 16 est une vue en coupe longitudinale partielle d'un réacteur continu et d'un guide d'ondes illustrant plus particulièrement le couplage entre la ligne de transmission à pertes selon l'invention et le guide d'ondes ;

- les figures 17 à 19 sont des vues en coupe longitudinale de réacteurs avec des dispositifs d'application conformes à l'invention ;

- les figures 20a et 20b sont des vues respectivement en perspective et en coupe longitudinale d'un réacteur continu avec un dispositif d'application selon l'invention ;

- la figure 20c est une vue identique à celle de la figure 20a avec une variante de réalisation de la ligne de transmission à pertes.

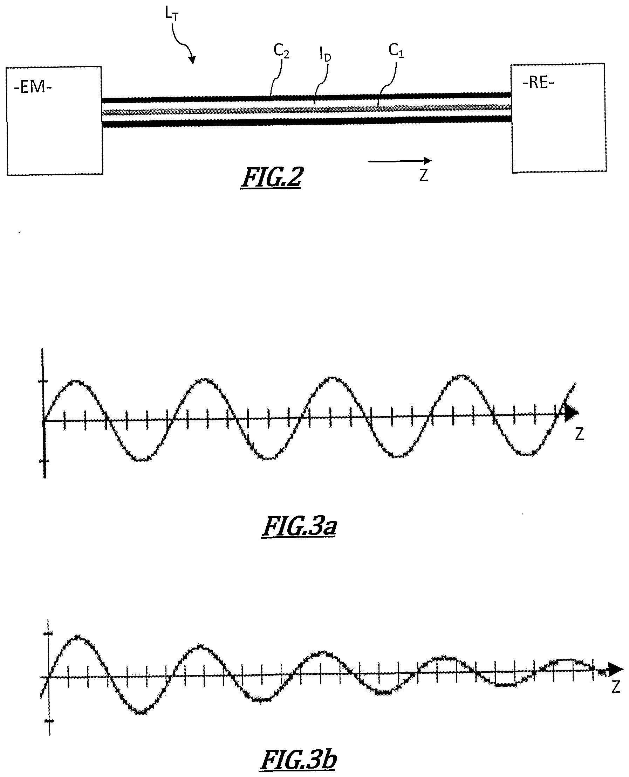

La figure 2 illustre une ligne de transmission LT qui transmet un signal d'un émetteur EM à un récepteur RE sous la forme d'un rayonnement électromagnétique qui se propage à l'intérieur de ladite ligne de transmission LT. La ligne de transmission LT comprend deux conducteurs électriques parallèles séparés par un isolant diélectrique ID (par exemple l'air ou un matériau adéquat du type connu): un premier conducteur C1, assurant la transmission du signal, et un deuxième conducteur C2 dit conducteur de retour et qui est par exemple relié à la masse. Pour transférer un maximum de puissance entre l'émetteur EM et le récepteur ER, il est essentiel de minimiser les pertes le long de la ligne, notamment les pertes par effet Joule du fait de la résistance intrinsèque aux conducteurs C1, C2.

La figure 3a illustre le comportement d'une ligne de transmission idéale, sans perte le long de la ligne, où l'amplitude de l'onde, correspondant à l'énergie transportée par l'onde, reste constante le long de la ligne (c'est-à-dire selon la direction z) et donc l'énergie électromagnétique transmise est optimale.

La figure 3b illustre le comportement d'une ligne de transmission à pertes, où l'on note que l'amplitude de l'onde diminue le long de la ligne, c'est-à-dire qu'il diminue entre le début de la ligne, côté émetteur, et la fin de le ligne, côté récepteur. Comme décrit ultérieurement, le but de l'invention est de provoquer de telles pertes, et même de contrôler ces pertes, afin d'utiliser une ligne de transmission à pertes comme dispositif d'application de l'énergie électromagnétique dans un milieu réactif. Avec l'invention, les pertes dans la ligne de transmission à pertes constituent la source de transmission au milieu réactif de l'énergie électromagnétique.

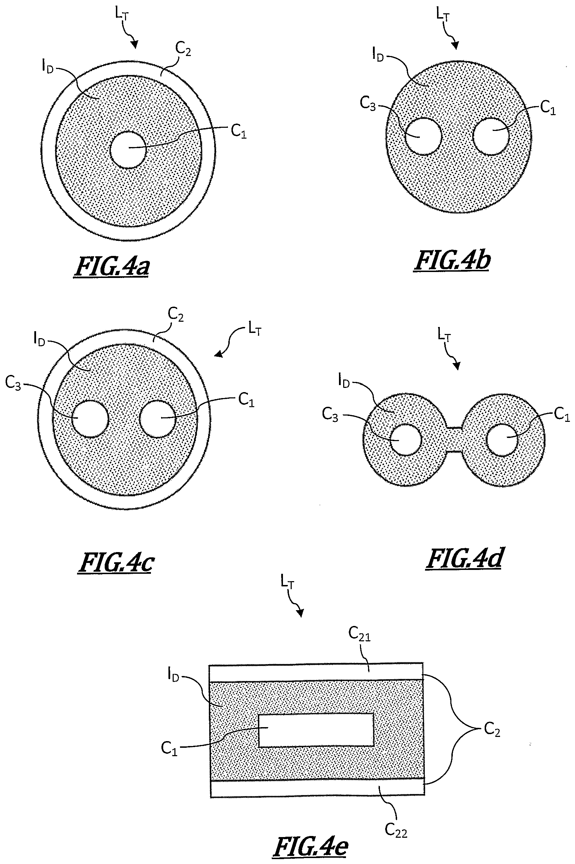

Les figures 4a à 4e illustrent différents modes de réalisation d'une ligne de transmission, qui se présente sous la forme d'un profilé de section constante.

La figure 4a illustre une ligne de transmission de type câble coaxial comportant un premier conducteur C1 central de section circulaire, enveloppé dans un isolant diélectrique ID, puis dans un deuxième conducteur C2 tubulaire.

La figure 4b illustre une ligne de transmission comprenant deux conducteurs C1 et C3 parallèles enveloppés dans un isolant diélectrique ID de section circulaire.

La figure 4c illustre une ligne de transmission identique à celle de la figure 4a sauf en ce qu'elle comprend en outre un troisième conducteur C3 parallèle au premier conducteur C1 et également enveloppé dans l'isolant diélectrique ID.

La figure 4d illustre une ligne de transmission identique à celle de la figure 4b sauf en ce que l'isolant diélectrique ID présente une section en forme générale de « 8 », chaque conducteur C1 et C3 étant enveloppé dans l'une des boucles du « 8 ».

La figure 4e illustre une ligne de transmission type « strip-line » comprenant un premier conducteur C1 de section rectangulaire enveloppé dans un isolant diélectrique ID également de section rectangulaire, et un deuxième conducteur C2 constitué de deux bandes conductrices C21 et C22 parallèles et disposées sur les longueurs de l'isolant diélectrique ID.

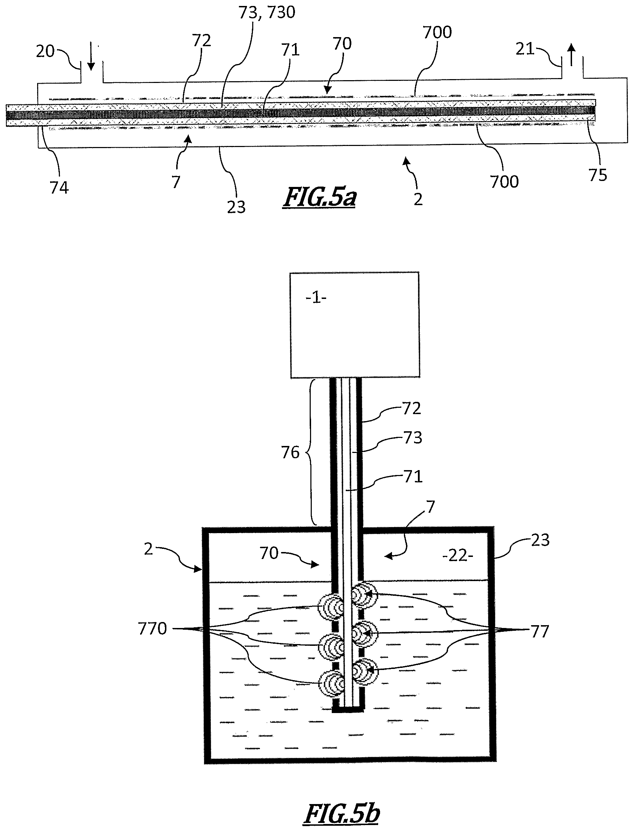

La figure 5a illustre de manière schématique un réacteur 2 du type continu comprenant une paroi extérieure tubulaire 23, dit corps de réacteur, et présentant une entrée 20 en amont du réacteur 2 et une sortie 21 en aval du réacteur 2. A l'intérieur du réacteur 2 est disposé un dispositif d'application d'énergie électromagnétique 7 comportant une ligne de transmission à pertes 70 adaptée pour transférer de l'énergie électromagnétique au milieu réactif circulant dans le réacteur 2. L'illustration de la ligne de transmission à pertes 70 en figure 5a est purement symbolique et on se reportera aux figures suivantes pour comprendre les différents modes de réalisation de ladite ligne 70.

De manière générale, et pour toute la suite de la description, la ligne de transmission à pertes 70 comprend :

- un premier conducteur 71 couplé d'une part au générateur et d'autre part au milieu réactif afin de permettre l'application de l'énergie électromagnétique,
- un deuxième conducteur 72 disposé autour du premier conducteur 71 ; et
- un isolant 73 présentant des caractéristiques diélectriques adaptées et enveloppant au moins partiellement le premier conducteur 71 et disposé entre les deux conducteurs 71 et 72.

Dans le mode de réalisation illustré en figure 5a, le premier conducteur 71 constitue un conducteur interne rectiligne, et le deuxième conducteur 72 constitue un conducteur externe également rectiligne ; l'isolant 73 est ici constitué d'un manchon 730 en matériau diélectrique qui est interposé entre le premier conducteur 71 et le deuxième conducteur 72.

En outre, la ligne de transmission à pertes 70 est du type rectiligne avec :

- une partie entrante 74 au niveau de laquelle ladite ligne de transmission à pertes 70 débouche dans ledit réacteur 2, ladite partie entrante 74 correspondant pour la suite de la description au début de ligne, et
- une extrémité libre 75 placée en aval du réacteur, ladite extrémité libre 75 correspondant pour la suite de la description au bout de ligne.

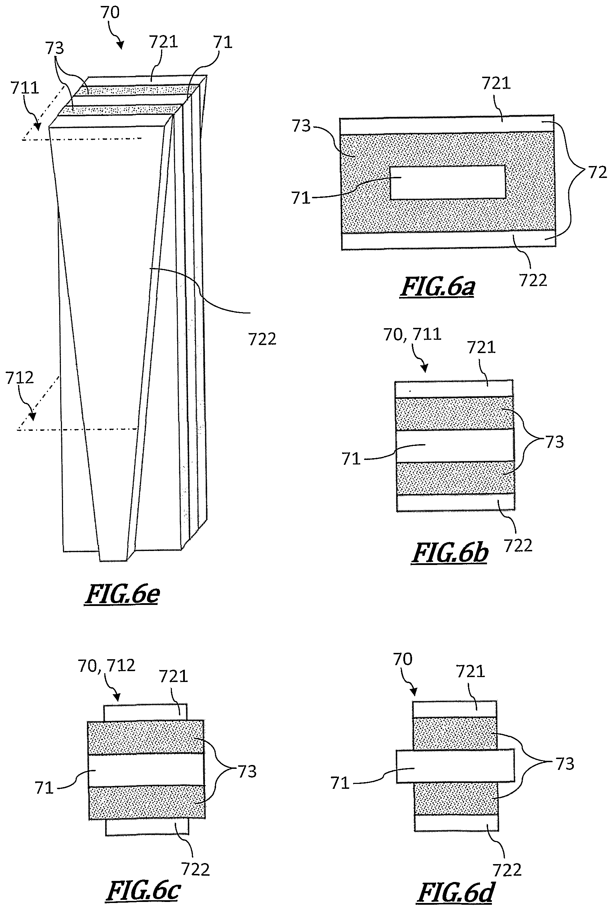

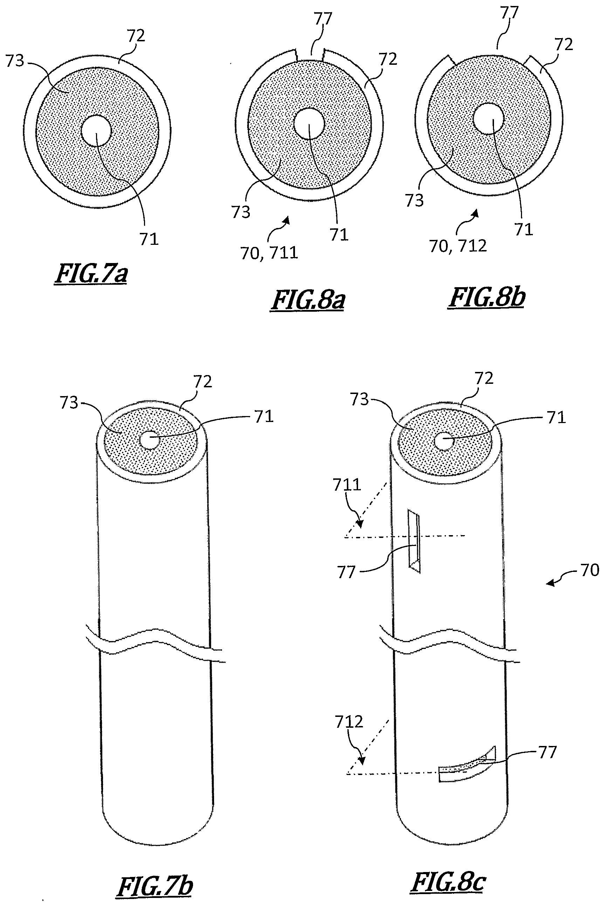

La ligne de transmission à pertes 70 et plus particulièrement son premier conducteur 71 sont couplés au milieu réactif au moyen d'une ligne de transmission à perte où le deuxième conducteur présente une géométrie variable et adaptée comme par exemple décrit ci-après en référence aux figures 6 et 8 . La géométrie de la ligne de transmission à pertes 70 est prévue pour obtenir un profil de répartition de la densité d'énergie électromagnétique délivrée au milieu réactif qui reste sensiblement constant ou uniforme tout le long de la ligne, ainsi qu'illustré en figure 5a par le halo 700 continu représentant le champ électrique autour de la ligne de transmission à pertes 70, correspondant ainsi à une application sensiblement homogène de l'énergie électromagnétique le long de la ligne de transmission à pertes 70. Pour obtenir un tel résultat, le principe est que l'interface de transfert d'énergie augmente le long de la ligne, afin de compenser la consommation de l'énergie électromagnétique le long de la ligne ; autrement dit, l'invention prévoit notamment que la surface de transfert par unité de longueur soit supérieure en bout de ligne qu'en début de ligne, afin qu'en début de ligne l'énergie appliquée soit sensiblement égale à l'énergie appliquée en fin de ligne où l'onde transporte une énergie plus faible qu'en début de ligne du fait de la consommation de l'énergie par le milieu en aval du bout de ligne.

Pour obtenir une telle variation de l'interface de transfert entre la ligne de transmission à pertes 70 et le milieu réactif, il est notamment possible de jouer seul ou en combinaison sur les paramètres suivants :

- géométrie de la ligne de transmission à pertes 70, comme les géométries du premier conducteur 71, de l'isolant 73 (et donc du manchon 730) et du deuxième conducteur 72 ;
- surface de contact offerte par le milieu réactif autour de la ligne de transmission à pertes 70, cette surface étant constante dans le cas d'une ligne de transmission à pertes 70 plongée directement dans le milieu réactif, mais cette surface pouvant être contrôlée dans le cas d'un milieu circulant dans une conduite de circulation où il est alors possible de jouer sur la géométrie de la conduite entre le début et le bout de ligne, de sorte notamment que le milieu réactif offre une plus grande surface exposée au rayonnement par unité de longueur en bout de ligne qu'en début de ligne.

Bien entendu, l'interface de transfert entre la ligne de transmission à pertes 70 et le milieu réactif pourrait être adaptée pour obtenir d'autres profils de répartition de la densité d'énergie électromagnétique délivrée au milieu réactif qu'un profil uniforme, comme par exemple un profil correspondant à une application supérieure d'énergie électromagnétique en milieu de ligne par rapport aux applications en début et fin de ligne ; un tel contrôle du profil de répartition de la densité d'énergie électromagnétique délivrée au milieu réactif étant particulièrement avantageux pour contrôler certaines réactions chimiques avec une circulation continue du milieu réactif, où il est nécessaire que des quantités prédéterminées d'énergie soit appliquées dans des portions prédéterminées de la circulation du milieu réactif.

La figure 5b illustre de façon schématique un réacteur 2 du type discontinu ou « batch » dont la paroi externe 23 délimite une cavité 22 contenant le milieu réactif et à l'intérieur duquel s'étend la ligne de transmission à pertes 70 conforme à l'invention. On note que la ligne de transmission à pertes 70 est couplée directement à un générateur de rayonnement électromagnétique 1, ladite ligne de transmission à pertes 70 présente une partie externe 76 s'étendant à l'extérieur du réacteur 2, et le long de laquelle les pertes doivent être minimales afin que le maximum d'énergie électromagnétique générée par le générateur de rayonnement électromagnétique 1 soit appliqué au milieu réactif. Dans ce mode de réalisation, on joue sur la géométrie de la ligne de transmission à pertes 70 pour obtenir un profil de répartition de la densité d'énergie électromagnétique prédéterminé, en l'occurrence sensiblement uniforme. Pour cela, des évidements 77 sont ménagées dans le deuxième conducteur 72, ces évidements 77 étant de géométrie adaptée au profil de répartition de la densité d'énergie électromagnétique souhaité. Sur la figure 5b, la ligne de transmission à pertes 70 présente 6 évidements 77 dont deux en début de ligne, deux en milieu de ligne et deux en bout de ligne. A ces évidements 77 correspondent des pertes par rayonnement dans le milieu réactif illustrées par les lobes de rayonnement 770, de sorte que l'application d'énergie au niveau des évidements 77 de début de ligne soit sensiblement identique à celles en milieu et en bout de ligne. On obtient ainsi un profil de répartition de la densité d'énergie électromagnétique discret, et on note qu'il est possible d'obtenir un profil qui se rapproche d'un profil continu en augmentant par exemple le nombre des évidements 77 le long de la ligne.

Les figures 6b à 6c illustrent des sections de ligne de transmission à pertes 70 conforme à l'invention, obtenues à partir d'une ligne de transmission classique dont la section est illustrée en figure 6a.

La figure 6a illustre, comme la figure 4e, une ligne de transmission type « strip-line » comprenant un premier conducteur 71 de section rectangulaire enveloppé dans un isolant diélectrique 73 constitué d'un matériau adapté et également de section rectangulaire, et un deuxième conducteur 72 constitué de deux bandes conductrices 721 et 722 parallèles et disposées sur les longueurs de l'isolant diélectrique 73. Dans une ligne de transmission avec une telle section, les pertes sont quasi-nulles car la largeur des bandes conductrices 721 et 722 est supérieure à la largeur du premier conducteur 71, de sorte qu'elles jouent un rôle de blindage de sorte que l'onde se déplace dans l'isolant diélectrique 73 sans rayonner vers l'extérieur.

Comme illustré aux figures 6a à 6d, pour contrôler l'interface de transfert entre la ligne de transmission à pertes 70 et le milieu réactif, il est prévu de jouer sur la géométrie de la ligne de transmission à pertes 70 et plus particulièrement sur la géométrie du deuxième conducteur 72 par rapport à celle du premier conducteur 71, afin de contrôler les pertes le long de la ligne de transmission à pertes 70. Ainsi, pour maîtriser le profil des pertes sur la longueur de la ligne 70 on peut faire varier la largeur d'au moins l'une des deux bandes conductrices 721 et 722. En outre, il est également possible de diminuer la largeur de l'isolant diélectrique 73 de sorte qu'elle soit égale (figures 6b et 6c) ou inférieure (figure 6d) à la largeur du premier conducteur 71. La première section transversale 711 de la ligne de transmission à pertes 70 illustrée en figure 6b présente une interface de couplage avec le milieu réactif inférieure à la deuxième section transversale 712 illustrée en figure 6c ; les largeurs des bandes conductrices 721 et 722 étant plus grandes au niveau de la première section transversale 711 qu'au niveau de la deuxième section transversale 712. Ainsi, en contrôlant la largeur des bandes conductrices 721 et 722, et éventuellement de l'isolant diélectrique 73, on contrôle l'interface de transfert d'énergie avec le milieu réactif.

La figure 6e illustre une ligne de transmission à pertes 70 où la largeur des bandes conductrices 721, 722 est décroissante entre le début de la ligne 70, en haut sur la figure, et le bout de la ligne, en bas sur la figure ; les largeurs augmentant ici de façon régulière. Pour contrôler l'interface de couplage avec le milieu réactif, la géométrie de la section de la ligne de transmission à pertes 70 (ou géométrie transversale de la ligne de transmission à pertes 70) varie le long de la ligne. Par exemple, la largeur des bandes conductrices 721 et 722 peut diminuer de façon régulière ou par paliers le long de la ligne, entre le début et le bout de ligne, afin de compenser l'affaiblissement de l'onde le long de la ligne, due à la consommation de l'énergie par le milieu entre le début et le bout de ligne, et ainsi obtenir un profil de répartition de la densité d'énergie électromagnétique sensiblement uniforme.

Les figures 8a, 8b et 8c illustrent une ligne de transmission à pertes 70 conforme à l'invention, obtenue à partir d'une ligne de transmission classique illustrée aux figures 7a et 7b.

Les figures 7a et 7b illustre une ligne de transmission de type câble coaxial qui comporte un premier conducteur 71 central de section circulaire, enveloppé dans un isolant diélectrique 73 constitué dans un matériau adapté, puis dans un deuxième conducteur 72 tubulaire formant blindage. Dans une ligne de transmission avec une telle section, les pertes sont quasi-nulles car le deuxième conducteur 72 entoure complètement et le long de toute la ligne le premier conducteur 71, de sorte que l'onde se déplace dans l'isolant diélectrique 73 sans rayonner vers l'extérieur.

Comme illustré aux figures 8a, 8b et 8c, pour contrôler l'interface de transfert entre la ligne de transmission à pertes 70 et le milieu réactif, il est prévu de jouer sur la géométrie de la ligne de transmission à pertes 70 et plus particulièrement sur la géométrie du deuxième conducteur 72, afin de contrôler les pertes le long de la ligne de transmission à pertes 70. Ainsi, pour obtenir de telles pertes, il est prévu de ménager des évidements 77 dans le deuxième conducteur 72 de sorte que la ligne de transmission à pertes 70 rayonne vers l'extérieur via lesdits évidements 77 ; les évidements 77 étant illustrés sous la forme de fentes rectangulaire, la forme des évidements 77 n'étant bien entendu pas limitée à cette forme particulière de fente. Afin de contrôler ces pertes, il est nécessaire de contrôler les dimensions transversales de la partie évidée du deuxième conducteur 72, ces dimensions étant par exemple distinctes entre la première section transversale 711 (illustrée en figure 8a) et la deuxième section transversale 712 (illustrée en figure 8b) de la ligne de transmission à pertes 70. La taille évidée du deuxième conducteur 72 par unité de longueur varie donc le long de la ligne. On peut ainsi jouer sur le nombre de fentes et sur les dimensions des fentes. Dans l'exemple illustré en figure 8c sont représentées deux fentes allongées de forme rectangulaire où une première fente 77 est parallèle à l'axe longitudinal de la ligne de transmission à pertes 70 (en haut sur la figure 8c et illustrée en figure 8a, la première section transversale 711 passant par cette première fente) et où une deuxième fente 77 est perpendiculaire à l'axe longitudinal de la ligne de transmission à pertes 70 (en bas sur la figure 8c et illustrée en figure 8b, la deuxième section transversale 712 passant par cette deuxième fente). Ainsi, la première fente 77 offre une surface de couplage par unité de longueur avec le milieu réactif inférieure à celle offerte par la deuxième fente 77. Ainsi, pour compenser l'affaiblissement de l'onde dans la ligne de transmission à pertes 70, il est nécessaire que la première fente soit disposée en début de ligne et que la deuxième fente soit disposée en bout de ligne. Il est également possible de prévoir une seule ou plusieurs fentes parallèles à l'axe longitudinal et dont la dimension transversale (dans la direction perpendiculaire à l'axe longitudinal de la ligne de transmission à pertes 70), augmente de façon continue (fente en forme de triangle par exemple) ou par palier le long de la ligne, entre le début et le bout de ligne. Il est également possible de prévoir plusieurs fentes allongées et dont l'inclinaison par rapport à l'axe longitudinal de la ligne de transmission à pertes 70 augmente, de sorte que l'évidement de début de ligne correspond par exemple à la première fente illustrée en figure 8a et que la fente de bout de ligne correspond à la deuxième fente illustrée en figure 8b, les fentes intermédiaires étant de plus en plus inclinées entre le début et le bout de ligne.

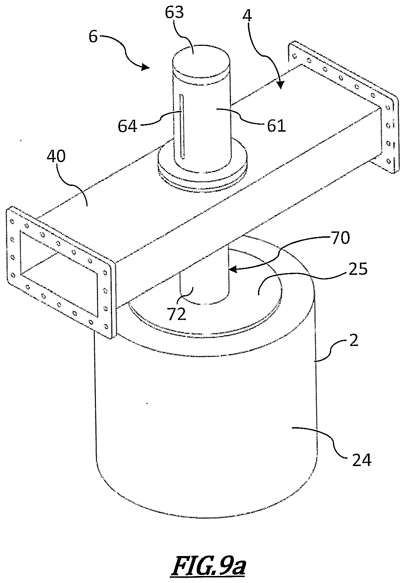

Les figures 9a à 9c illustrent un réacteur 2 du type discontinu dont la paroi externe (ou corps de réacteur) 23 délimite une cavité 22 contenant le milieu réactif et à l'intérieur duquel s'étend une ligne de transmission à pertes 70 conforme à l'invention. La paroi externe 23 est entourée au moins partiellement par une double enveloppe 24 entourant la paroi externe 23 ou corps de réacteur, à l'intérieur de laquelle peut circuler du fluide de refroidissement, du type fluide caloporteur ou fluide de réfrigération ou fluide cryogénique, ou un fluide de réchauffage, entre une entrée 240 et une sortie 241 prévues dans l'enveloppe 24. Le réacteur 2 est fermé de façon étanche à son extrémité supérieure 25 traversée par la ligne de transmission à pertes 70.

La ligne de transmission à pertes 70 est couplée avec un guide d'ondes 4 qui transmet un rayonnement électromagnétique avantageusement du type micro-ondes. Le guide d'ondes 4 comporte un tronçon de couplage 40 qui s'étend normalement à la ligne de transmission à pertes 70 et qui est couplé de façon transversale à ladite ligne de transmission à pertes 70. Ce tronçon 40 du guide d'ondes 4 délimite intérieurement une cavité de couplage 401 à l'intérieur de laquelle s'étend le premier conducteur 71 de la ligne de transmission à pertes 70 ; ledit premier conducteur 71 s'étendant dans ladite cavité de couplage 401 sans être entouré de l'isolant diélectrique 73 et du deuxième conducteur 72. Ainsi, le premier conducteur 71 est couplé au guide d'ondes 4 au niveau de cette cavité de couplage 401 dans laquelle ledit premier conducteur 71 reçoit le rayonnement électromagnétique véhiculé par le guide d'ondes 4.

Le deuxième conducteur 72 et l'isolant diélectrique 73 s'étendent autour du premier conducteur 71 à partir de ladite cavité de couplage 401 et ce jusque dans le réacteur 2 ; l'isolant diélectrique 73 prenant la forme d'un manchon 730 en matériau diélectrique disposé entre les deux conducteurs 71 et 72. Ainsi, la ligne de transmission à pertes 70 présente trois portions distinctes :

- une première portion 701 de couplage avec le guide d'ondes 4 et plus généralement avec le générateur de rayonnement électromagnétique 1, où le premier conducteur 71 est exposé et n'est donc pas entouré par le deuxième conducteur 72 et par l'isolant diélectrique 73 ;

- une deuxième portion 702 de liaison entre le guide d'ondes 4, et plus particulièrement la cavité de couplage 401, et le réacteur 2 où le premier conducteur 71 est complètement entouré par le deuxième conducteur 72 et par l'isolant diélectrique 73 de sorte que le minimum de perte se produise le long de cette portion intermédiaire ; et

- une troisième portion 703 d'application de l'énergie électromagnétique au milieu réactif, ladite portion inférieure 703 s'étendant à l'intérieur du réacteur 2.

La troisième portion 703 présente la configuration de ligne de transmission à pertes, comme par exemple illustré aux figures 6b à 6e ou aux figures 8a à 8c.

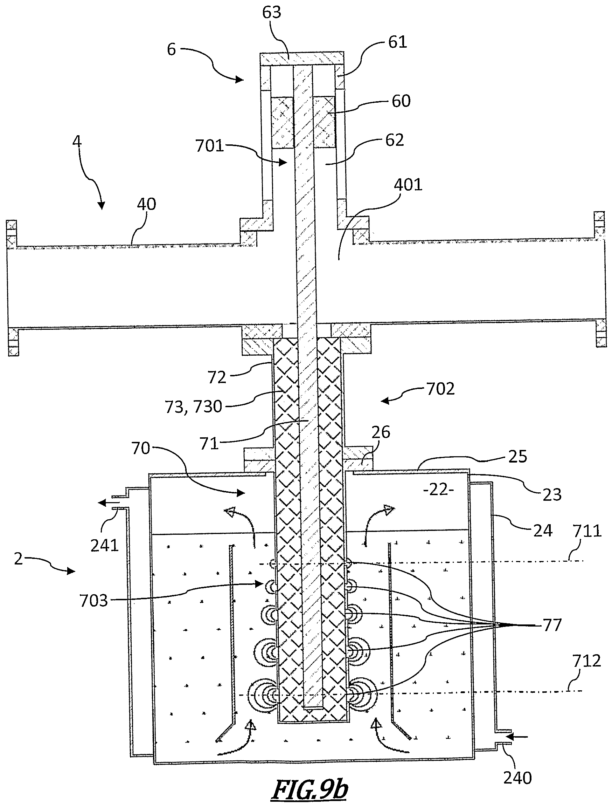

Dans le mode de réalisation illustré en figure 9b, la ligne de transmission à pertes 70 présente des évidements 77 ménagés dans le deuxième conducteur 77 le long de la troisième portion 703 ; lesdits évidements 77 étant par exemple de dimensions croissantes entre le début et le bout de ligne. Ainsi, la première section transversale 711 présente une interface de transfert et donc un couplage avec le milieu réactif inférieurs à ceux de la deuxième section transversale 712 de la ligne de transmission à pertes 70.

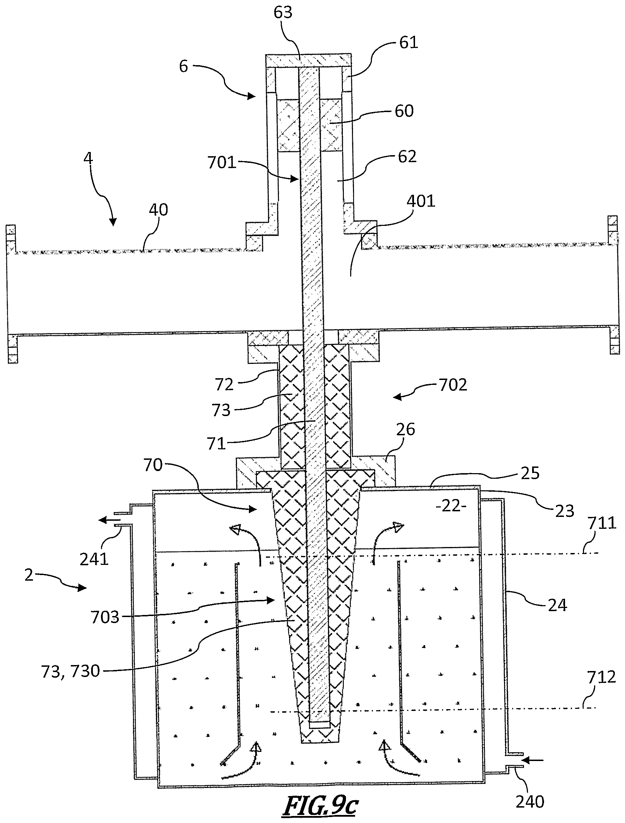

Dans le mode de réalisation illustré en figure 9c, la ligne de transmission 70 présente un isolant diélectrique 73 le long de la troisième portion 703 qui comprend un manchon 730 en matériau diélectrique entourant ledit premier conducteur 71, ledit manchon 730 étant de section croissante en le début et le bout de ligne. Ainsi, le manchon 730 présente une épaisseur croissante à partir du premier conducteur 71 avec une forme générale tronconique. Ainsi, le milieu réactif est plus éloigné du premier conducteur 71 en début qu'en bout de ligne, de sorte que l'interface de transfert croît entre le début et le bout de ligne. Par exemple, la première section transversale 711 présente une interface de transfert et donc un couplage avec le milieu réactif inférieurs à ceux de la deuxième section transversale 712 de la ligne de transmission à pertes 70.

La ligne de transmission à pertes 70 traverse l'extrémité supérieure 25 du réacteur 2 via un joint d'étanchéité 26 adapté.

Lorsque le guide d'ondes 4 est parfaitement adapté au générateur de rayonnement électromagnétique 1 et à l'ensemble ligne de transmission à pertes 70/milieu réactif, condition remplie lorsque l'impédance de sortie du générateur de rayonnement électromagnétique 1 et l'impédance d'entrée de l'ensemble ligne de transmission à pertes 70/milieu réactif est égale à l'impédance caractéristique du guide d'ondes 4, le guide d'ondes 4 est parcouru seulement par des ondes progressives et le maximum d'énergie électromagnétique est transmis entre le générateur et le milieu réactif.

Pour adapter l'ensemble ligne de transmission à pertes 70/milieu réactif, le dispositif d'application 7 comprend des moyens d'adaptation 6 de l'impédance de l'ensemble ligne de transmission à pertes 70/milieu réactif. Ces moyens d'adaptation 6 comprennent un piston de court-circuit 60 monté coulissant et réglable en position dans un manchon 61 disposé sur le guide d'ondes 4 afin de déboucher dans la cavité de couplage 401 sur un bord opposé au réacteur 2. Le manchon 61 et le piston de court-circuit 60 sont alignés avec la ligne de transmission à pertes 70, et plus particulièrement le piston de court-circuit 60 qui est guidé en translation autour du premier conducteur 71, ledit premier conducteur 71 traversant ladite cavité de couplage 401 afin de s'étendre également à l'intérieur de l'espace 62 délimité par ledit manchon 61. Le premier conducteur 71 vient en butée contre la paroi transverse d'extrémité 63 dudit manchon 61, le piston 60 étant monté coulissant sur ce premier conducteur 71. En réglant la position du piston 60, on adapte l'impédance de l'ensemble ligne de transmission à pertes 70/milieu réactif, afin d'optimiser le transfert d'énergie électromagnétique entre le générateur de rayonnement électromagnétique 1 et le milieu réactif. Le manchon 61 présente ainsi une fente longitudinale 64, afin de laisser passer des moyens (non représentés) pour entraîner en déplacement ledit piston 60, comme une tige solidaire d'une part du piston 60 et couplé d'autre part à des moyens d'entraînement du type manuel ou motorisé.

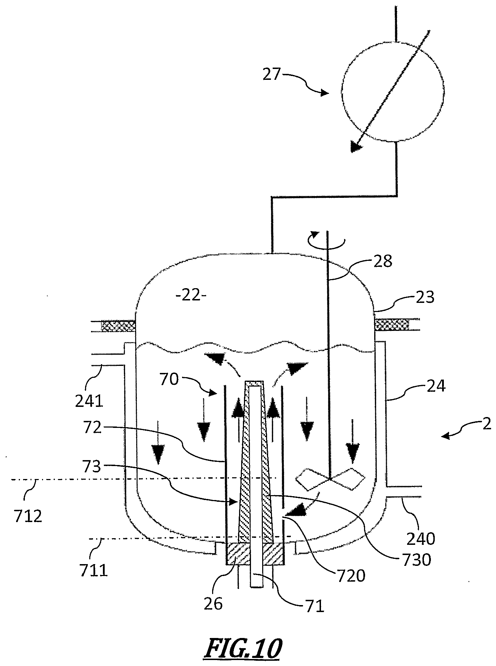

La figure 10 illustre un autre réacteur 2 discontinu qui délimite une cavité 22 close et couplée à un condenseur de mise à l'air 27 pour travailler à reflux au sein ladite cavité 22 close.

La cavité 22 peut également être reliée à des moyens de mise en pression, non représentés, afin de travailler sous une pression déterminée dans ladite cavité 22. Les moyens de mise en pression sont du type connu, avec des circuits adéquats comprenant par exemple des soupapes de sécurité, un disque de rupture de sécurité etc.

Le réacteur 2 peut également comprendre une double enveloppe 24 du même type que celle décrite ci-dessus.

Le réacteur 2 peut également comprendre des moyens d'agitation 28 du milieu réactif, sous la forme d'un agitateur mécanique qui débouche de façon étanche dans la cavité 22 et qui est relié à des moyens d'entraînement en rotation (non représentés) comme un moteur rotatif.

L'isolant diélectrique 73 de la ligne de transmission à pertes 70 à l'intérieur du réacteur 2 est constitué au moins en partie du milieu réactif, qui circule ainsi entre le premier conducteur 71 et le deuxième conducteur 72 ; l'agitation du milieu réactif favorisant cette circulation entre les deux conducteurs. Ainsi, le milieu réactif, aux propriétés diélectriques adaptées, constitue en partie l'isolant diélectrique 73 de la ligne de transmission à pertes 70 dans la cavité 22. Ainsi, le milieu réactif est couplé à la ligne de transmission à pertes 70 en étant disposé entre les deux conducteurs de ladite ligne de transmission à pertes 70. Il est également prévu un manchon 730 en matériau diélectrique entourant le premier conducteur 71 de forme tronconique comme décrit ci-avant en référence à la figure 9b, la forme dudit manchon 730 étant adaptée au profil de répartition de densité d'énergie souhaité. Dans cette réalisation, le manchon 730 est disposé autour du premier conducteur 71 et espacé par rapport au deuxième conducteur 72 afin que le milieu réactif puisse circuler entre le manchon 730 et ledit deuxième conducteur 72. Dans une variante non illustrée, le manchon 730 est disposé à l'intérieur du deuxième conducteur 72, contre sa face interne, et espacé par rapport au premier conducteur 71 afin que le milieu réactif puisse circuler entre le manchon 730 et ledit premier conducteur 71 ; la forme du manchon 730 étant encore une fois adaptée au couplage souhaité entre le premier conducteur 71 et le milieu réactif, car plus le manchon 73 entre le premier 71 et le deuxième 72 conducteur est épais et plus le couplage est faible.

Le premier conducteur 71 de la ligne de transmission à pertes 70 traverse la paroi du réacteur 2 à travers un joint d'étanchéité 26 réalisé dans un matériau isolant, pour permettre le transfert de l'énergie électromagnétique. A l'extérieur du réacteur 2, la ligne de transmission à pertes 70 peut par exemple se prolonger comme décrit ci-avant avec la première portion et la deuxième portion.

On note que le deuxième conducteur 72 présente un passage 720 de circulation du milieu réactif, par exemple au niveau du début de ligne, pour que le milieu réactif puisse circuler entre le bout de ligne, ouvert au milieu réactif, et ce passage 720.

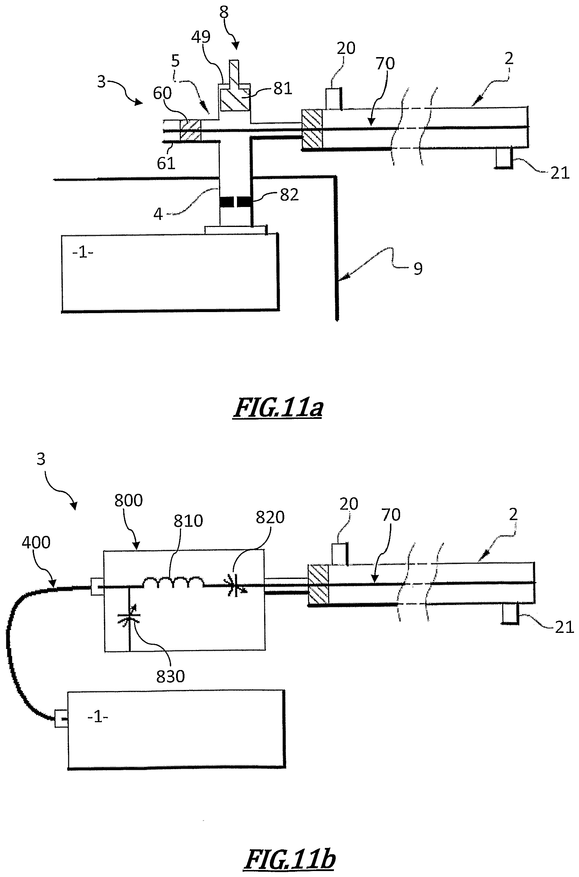

La figure 11a illustre de façon schématique un appareil de traitement électromagnétique d'un milieu réactif par rayonnement micro-ondes selon l'invention, qui comprend :

- un générateur 1 de rayonnement micro-ondes ;
- un réacteur 2 contenant ledit milieu réactif ; et
- un dispositif de transmission 3 du rayonnement électromagnétique généré par le générateur 1 au milieu réactif contenu dans ledit réacteur 2.

Le dispositif de transmission 3 comprend :

- un guide d'ondes 4 disposé en sortie du générateur 1 et couplé à la ligne de transmission à pertes 70 selon l'invention, afin de transmettre l'énergie électromagnétique générée au milieu réactif ;
- des moyens de couplage 5 agencés pour permettre le transfert dans le milieu réactif de l'énergie électromagnétique issue du guide d'ondes 4 ; et
- des moyens d'adaptation 8 conçus pour assurer l'adaptation de l'énergie électromagnétique au milieu réactif et permettre l'optimisation du transfert d'énergie en fonction du milieu.

Les moyens d'adaptation 8 comprennent :

- un premier organe mobile d'adaptation 81 constitué d'un piston de court-circuit comprenant une plaque métallique, en cuivre ou en aluminium par exemple, placée perpendiculairement à la direction de propagation des ondes, ledit piston de court-circuit 81 étant positionné à l'extrémité libre 49 du guide d'ondes 4 opposée au générateur 1, et donc en aval du réacteur 2 ;
- et, selon les cas, un deuxième organe mobile d'adaptation 82 constitué d'un iris de couplage variable, disposé dans le guide d'ondes 4 entre le générateur 1 et le piston de court-circuit 81, et plus particulièrement en amont du réacteur 2.

Les moyens de couplage 5 comprenant ladite ligne de transmission à pertes 70 et les moyens d'adaptation 6 de l'impédance de l'ensemble ligne de transmission à pertes 70/milieu réactif ; ces moyens d'adaptation 6 comprenant notamment le piston de court-circuit 60 ainsi que décrit ci-dessus. Le couplage entre le guide d'ondes 4 et la ligne de transmission à pertes 70 peut être du même type que celui décrit ci-dessus en référence à la figure 9b.

L'appareil comprend également un compartiment 9 qui isole le générateur de rayonnement électromagnétique 1 du réacteur 2, afin notamment de protéger les personnes et/ou instruments extérieurs audit compartiment 9 de tout risque d'explosion et/ou d'incendie pouvant se produire au niveau du générateur de rayonnement électromagnétique 1. Le compartiment 9 peut en outre être inerté par remplissage d'un gaz neutre, comme par exemple de l'argon, du dioxyde de carbone ou de l'azote, et ensuite isolé de façon étanche pour éviter les fuites de gaz neutre. On entend par inertage la technique qui consiste à remplacer une atmosphère, par exemple explosive, par un gaz ou un mélange gazeux incombustible et non comburant.

Cette technique d'inertage peut également être employée pour la mise sous atmosphère du guide d'ondes 4, des moyens de couplage 5 et du réacteur 2 dans le cas du traitement d'un milieu réactif comprenant des substances inflammables, explosibles ou susceptible de produire en cours de traitement de telles substances. Pour cela, on peut positionner des fenêtres (non représentées) dans le guide d'ondes 4 ; lesdites fenêtres étant constituées d'un matériau isolant et transparent aux ondes, comme par exemple le quartz.

La figure 11b illustre de façon schématique un appareil de traitement électromagnétique d'un milieu réactif par rayonnement hautes fréquences selon l'invention, qui comprend :

- un générateur 1 de rayonnement hautes fréquences ;
- un réacteur 2 du type continu avec une entrée 20 et une sortie 21 dudit milieu réactif ; et
- un dispositif de transmission 3 du rayonnement électromagnétique généré par le générateur 1 au milieu réactif contenu dans ledit réacteur 2.

Le dispositif de transmission 3 comprend :

- un câble coaxial de transmission 400, type liaison 50 Ohms, disposé en sortie du générateur 1 et couplé à la ligne de transmission à pertes 70 selon l'invention, afin de transmettre l'énergie électromagnétique générée au milieu réactif ;
- des moyens d'adaptation 800 conçus pour assurer l'adaptation de l'énergie électromagnétique à la ligne de transmission à pertes 70 et permettre l'optimisation du transfert d'énergie en fonction du milieu.

Les moyens d'adaptation 800 comprennent un système d'adaptation électrique placé en série sur le câble coaxial de transmission 400, ledit système étant du type connu de l'homme du métier et comprenant par exemple :

- une self 810 (ou inductance) et une première capacité variable 820 en série sur le câble coaxial de transmission 400, ladite première capacité variable 820 corrigeant la partie réactive de l'impédance ; et
- une deuxième capacité variable 830 en parallèle du câble coaxial 400, relié d'une part à l'une des bornes de la self 810, et d'autre par à un potentiel de référence tel que la masse, ladite deuxième capacité variable 830 corrigeant la partie résistive de l'impédance.

Pour coupler le câble coaxial de transmission 400 et la ligne de transmission à pertes 70, il suffit de relier électriquement le premier conducteur 71 de la ligne de transmission à pertes 70 avec un conducteur correspondant du câble de transmission 400. Le système d'adaptation électrique 800 assurant l'adaptation d'impédance entre le câble de transmission 400 et l'ensemble ligne de transmission à pertes 70/milieu réactif.

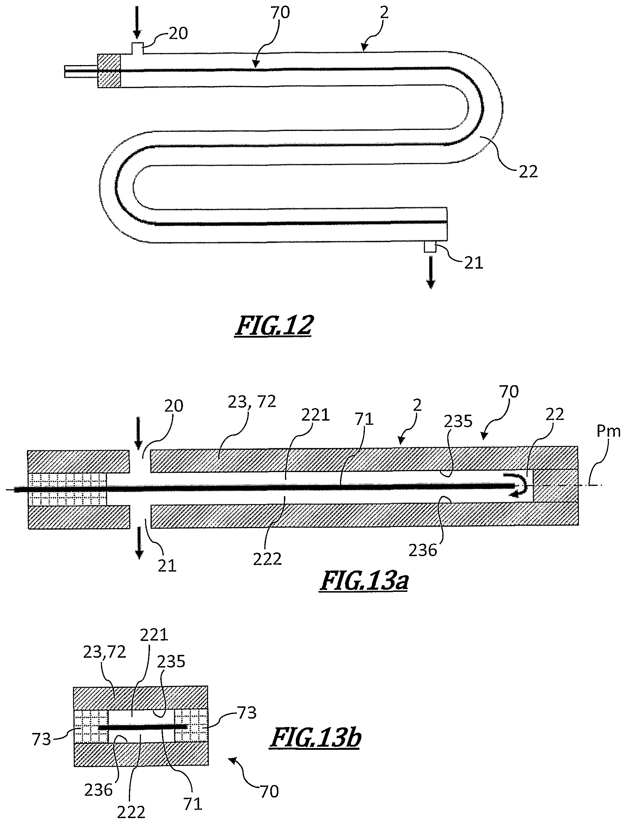

La figure 12 illustre un réacteur 2 sinueux c'est-à-dire délimitant une cavité 22 de forme générale sinueuse. Le réacteur 2 comporte par exemple trois tronçons rectilignes parallèles entre eux et reliés successivement par un coude à 180°. La ligne de transmission à pertes 70 est également de forme générale sinueuse, et plus particulièrement de forme sensiblement identique à celle de la cavité 22 afin d'offrir une interface de couplage avec le milieu réactif tout le long du réacteur 2, et ainsi d'appliquer de l'énergie électromagnétique. Bien entendu d'autres formes de réacteur 2 peuvent être envisagées, l'essentiel étant de noter qu'une ligne de transmission à pertes 70 peut s'adapter à toutes les formes de réacteur 2, et n'est pas seulement limitée aux réacteurs rectilignes.

Par ailleurs le réacteur 2 et la ligne de transmission à pertes 70 sera d'autant plus longue que le milieu réactif sera peu absorbant, comme par exemple les produits oléagineux. La longueur de la ligne de transmission à pertes 70 pourra également être adaptée à la durée du séjour dans le réacteur 2. L'intérêt d'une configuration sinueuse pour le réacteur 2 est de permettre d'avoir un long trajet pour le milieu réactif en évitant d'avoir un réacteur rectiligne trop long, donc trop encombrant. La longueur de la ligne de transmission à pertes 70, et aussi du réacteur 2, peut par exemple être comprise entre quelques centimètres et plusieurs mètres.

Dans tous les cas, les parois métalliques du réacteur peuvent être constituées d'une double enveloppe dans laquelle peuvent circuler des fluides caloporteurs, frigorifiques ou cryogéniques pour obtenir des températures de surfaces adaptées aux besoins des traitements envisagés. Les formes de réalisation de l'invention décrites ci-après illustrent la possibilité d'organiser des surfaces d'échange thermiques plus ou moins imortantes entre le milieu réactif et les fluides circulant dans la double enveloppe. Les fluides de la double enveloppe peuvent bien entendu circuler dans le même sens que le mileu réactif ou à contre courant.

Les figures 13a et 13b illustrent un autre mode de réalisation de la ligne de transmission à pertes 70 s'étendant à l'intérieur d'un réacteur 2 ici de section parallélépipédique. Le premier conducteur 71 est exposé au milieu réactif dans le réacteur 2, à l'intérieur de la cavité 22 interne du réacteur 2. Au sein du réacteur 2, le deuxième conducteur 72 est constitué de la paroi externe 23 du réacteur 2 (ou corps de réacteur) ; ladite paroi externe 23 étant électriquement couplée à la partie du deuxième conducteur 72 extérieure au réacteur 2.

Le premier conducteur 71, de section rectangulaire, s'étend sur toute la largeur du réacteur 2 et ses bords longitudinaux sont respectivement enveloppés dans des bandes d'isolant diélectrique 73 ; lesdites bandes d'isolant diélectrique 73 définissant ainsi des parois du réacteur 2.

Dans cette configuration, le premier conducteur 71 divise la cavité 22 en deux canaux, respectivement le premier 221 et le deuxième 222 canal, seulement en communication au niveau du bout de ligne, correspondant ici à l'extrémité libre du premier conducteur 71. Le premier canal 221 est délimité également par la première surface interne 235 de la paroi 23, tandis que le deuxième canal 222 est délimité également par la deuxième surface interne 236 de la paroi 23 opposée à la première surface interne 235. Le réacteur 2 présente en outre une entrée 20 et une sortie 21 de circulation du milieu réactif, où l'entrée 20 débouche directement dans le premier canal 221 et la sortie 21 débouche directement dans le deuxième canal 222 ; l'entrée 20 et la sortie 21 étant avantageusement disposées au niveau du début de ligne, par exemple de façon symétrique par rapport au premier conducteur 71. Ainsi, le milieu réactif entre dans le réacteur 2 via l'entrée 20, circule dans le premier canal 221 où il est couplé avec le premier conducteur 71, puis circule dans le deuxième canal où il est à nouveau couplé avec le premier conducteur 71 avant de sortir via la sortie 21.

On note que les canaux 221 et 222 sont de mêmes dimensions constantes du fait que d'une part le premier conducteur 71 est d'épaisseur constante et qu'il s'étend dans le plan médian Pm de la cavité 22, et que d'autre part les deux surfaces internes 235 et 236 sont symétriques par rapport au plan médian Pm et parallèles à ce plan médian Pm.

En variante et afin d'ajuster le profil de la répartition des champs électromagnétiques, il est bien entendu possible de jouer sur les volumes respectifs des canaux 221 et 222, les deux canaux 221 et 222 pouvant être de dimensions distinctes et variables en jouant notamment sur :

- la géométrie du premier conducteur 71 qui peut varier le long de la ligne 70, notamment son épaisseur qui peut varier de façon asymétrique par rapport au plan médian Pm de la cavité et/ou son inclinaison par rapport au plan médian Pm de la cavité 22 ;
- la géométrie de la paroi externe 23 qui peut varier le long de la ligne, et plus particulièrement la forme des deux surfaces internes 235 et 236 qui peuvent ne plus être symétriques par rapport au plan médian Pm.

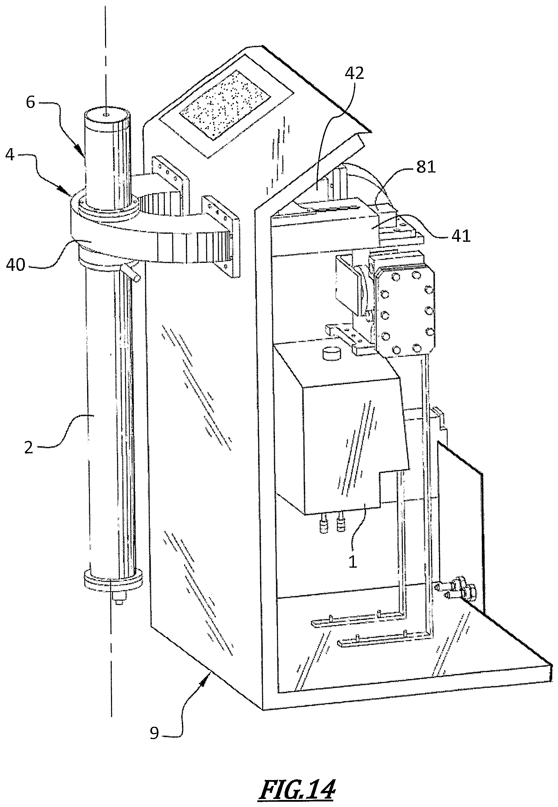

La figure 14 illustre un appareil conforme à la représentation schématique de la figure 11a, où le rayonnement est du type micro-ondes. Dans ce mode de réalisation, le guide d'ondes 4 comporte un tronçon de couplage 40 de forme recourbée, notamment en forme générale de « U », formant une boucle de retour dudit guide d'ondes 4. Le guide d'ondes 4 comporte en outre un premier 41 et un deuxième 42 tronçons rectilignes en regard l'un de l'autre et respectivement connectés à une première et une deuxième extrémités dudit tronçon de couplage 40 recourbé.

Un premier organe mobile d'adaptation 81, tel qu'un piston de court-circuit, est mobile en translation dans le premier tronçon rectiligne 41, et un deuxième organe mobile d'adaptation 82 (non illustré), tel qu'un iris de couplage variable, est mobile en translation dans le deuxième tronçon rectiligne. Les tronçons rectilignes 41, 42 sont parallèles et en vis-à-vis, de sorte que les deux organes mobiles d'adaptation 81, 82 peuvent être déplacés en synchronisation par des moyens simples, avec un seul moteur et sans dispositif complexe de synchronisation.

On note que le réacteur 2 est couplé au tronçon recourbé 40 du guide d'ondes 4, ledit tronçon de couplage 40 recourbé s'étendant au moins partiellement à l'extérieur dudit compartiment 9. Certains éléments de l'appareil ne sont pas décrits à nouveau, ayant déjà fait l'objet d'une description faisant référence aux figures 9b (pour les moyens d'adaptation et de couplage) et 11a.

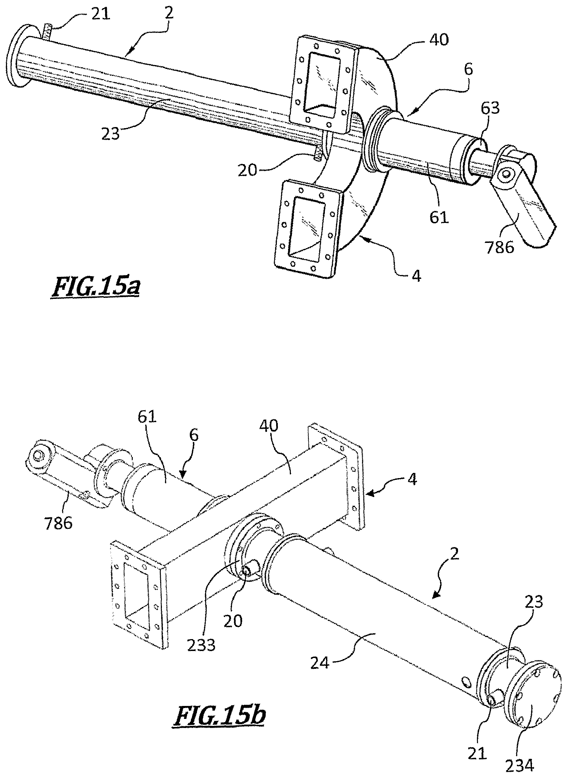

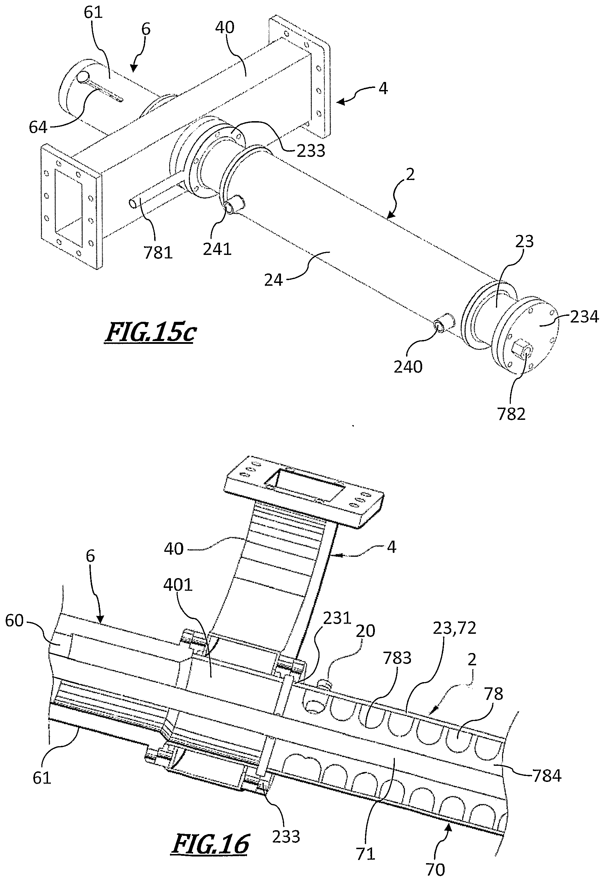

Les figures 15 à 20 illustrent toutes un réacteur 2 du type continu avec une entrée 20 et une sortie 21 de circulation du milieu réactif. Sur les figures 15 à 20 ne sont représentés que le réacteur 2 couplé à un tronçon de couplage 40 du guide d'ondes 4, le tronçon de couplage 40 pouvant être du type rectiligne (figure 15b et 15c) ou recourbé en forme de « U » (figures 15a et 16).

Ce réacteur 2 comprend une paroi externe 23 tubulaire, notamment de section cylindrique, qui s'étend transversalement au guide d'ondes 4, et qui délimite une cavité interne 22, également de section cylindrique, dans laquelle débouchent des orifices d'entrée 20 et de sortie 21 ménagées dans ladite paroi externe 23 pour permettre la circulation de milieu réactif dans cette cavité 22 entre ces deux orifices 20, 21.

La paroi externe 23 présente une première extrémité 231 qui est rapportée solidairement sur le tronçon de couplage 40 du guide d'ondes 4, par exemple par vissage, ou par l'intermédiaire d'une couronne 233 rapportée solidairement sur cette première extrémité 231 de la paroi externe 23. La ligne de transmission à pertes 70 traverse cette première extrémité 231 via un joint d'étanchéité et d'isolation 26.

La paroi externe 23 présente une deuxième extrémité 232 fermée par un couvercle 234.

A l'exception du mode de réalisation illustré en figure 15a, le réacteur 2 comprend une double enveloppe 24 du même type que celle décrite ci-dessus en référence à la figure 9b. La double enveloppe 24 tubulaire, notamment de section cylindrique, entoure une portion de longueur de la paroi externe 23 du réacteur 2, située entre l'entrée 20 et la sortie 21.

Le couplage entre la ligne de transmission à pertes 70 et le guide d'ondes 4 avec une cavité de couplage 401 est du même type que celui décrit ci-dessus en référence à la figure 9b.

De même, les moyens d'adaptation 6 de l'impédance de l'ensemble ligne de transmission à pertes 70/milieu réactif, avec notamment le piston 60 et le manchon 61, sont également du même type que celui décrit ci-dessus en référence à la figure 9b.

La paroi externe 23 du réacteur 2 constitue le deuxième conducteur 72 de la ligne de transmission à pertes 70 dans les modes de réalisation illustrées aux figures 16 à 20 ; le premier conducteur 71 s'étendant dans la cavité 22 du réacteur 2, et l'isolant diélectrique 73 étant disposé entre le premier conducteur 71 et le deuxième conducteur 72, ici la paroi externe 23 du réacteur 2 ; l'isolant diélectrique 73 pouvant être constitué dans un matériau adapté rapporté sur le premier conducteur 71, ou pouvant être constitué de tout ou partie du milieu réactif comportant au moins un composant sensible aux ondes électromagnétiques.

Les figures 16 à 19 illustrent plusieurs modes de réalisation où un milieu réactif circule dans le réacteur 2 au sein d'un canal de circulation 78 entourant le premier conducteur 71 de la ligne de transmission à pertes 70 sur toute ou partie de ladite ligne, ledit canal de circulation étant au moins partiellement transparent au rayonnement électromagnétique. Le canal de circulation 78 réalise l'interface entre le premier conducteur 71 et le milieu réactif qui circule à l'intérieur.

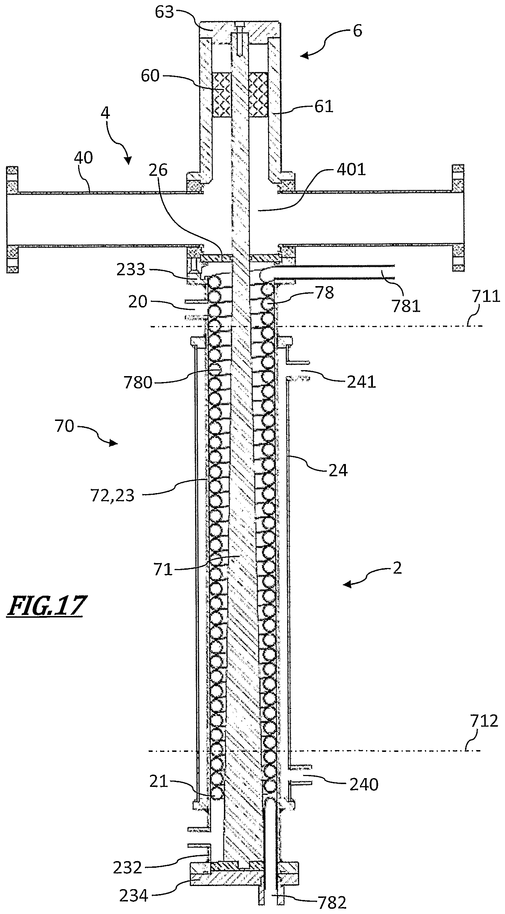

Dans le mode de réalisation illustré aux figure 15c et 17, le canal de circulation 78 est composé d'un tube creux 780 en forme générale de spirale et qui entoure le premier conducteur 71 sur une partie de sa longueur. Le tube creux 780 s'étend ainsi entre le deuxième conducteur 72, ici la paroi externe 23 du réacteur 2, et le premier conducteur 71. Le tube creux 780 est réalisé dans un matériau transparent au rayonnement électromagnétique.

Une première extrémité 781 du tube creux 780 sort du réacteur 2, au niveau de la première extrémité 231 de la paroi externe 23, et une deuxième extrémité 782 sort également du réacteur 2, au niveau de la deuxième extrémité 232 de la paroi externe 23, notamment en traversant le couvercle 234.

On note qu'un milieu réactif peut être introduit dans le réacteur 2 via le tube creux 780, et un fluide diélectrique neutre (du type liquide ou gazeux) peut être introduit dans le réacteur 2 via l'entrée 20 et la sortie 21. De la sorte, ledit milieu réactif circule dans le tube creux 780 tandis que le fluide diélectrique neutre circule dans le réacteur 2, entre le premier conducteur 71, le deuxième conducteur 72 et ledit tube creux 780, et peut ainsi faire office d'isolant diélectrique entre le premier conducteur 71 et le milieu réactif. Il est ainsi possible de jouer sur la répartition du profil du champ électromagnétique pour modifier le transfert d'énergie entre le premier conducteur 71 et le milieu réactif circulant dans le tube creux 780. Une fonction importante du fluide diélectrique neutre est de favoriser la régulation thermique du milieu réactif en évitant la formation de points chauds au sein du tube creux 780, car le milieu réactif est plus difficilement thermo-régulé par la double enveloppe 24 du fait qu'il circule dans le tube creux 780 et qu'ainsi la surface d'échange thermique est réduite.

Pour faire varier l'interface de transfert entre la ligne de transmission à pertes 70 et le milieu réactif circulant dans le tube creux 780, il est possible de jouer seul ou en combinaison sur les deux paramètres suivants :

-    géométrie du premier conducteur 71 ;
-    géométrie du tube creux 780, afin de contrôler la surface de milieu réactif exposée au rayonnement du premier conducteur 71.

Pour que le premier conducteur 71 offre une surface rayonnante par unité de longueur croissante, entre le début et le bout de ligne, ledit premier conducteur 71 présente une forme tronconique. Ainsi, le diamètre augmentant le long de la ligne, la surface rayonnante du premier conducteur 71 augmente aussi par unité de longueur.

Le tube creux 780 illustré en figure 17 est de section constante (correspondant à la taille du tube), de diamètre constant (correspondant au diamètre de la spire), et de pas constant ; le seul contrôle de l'interface de couplage entre la ligne de transmission à pertes 70 et le milieu réactif étant ici effectuée par la forme tronconique du premier conducteur 71.

Cependant, pour que le milieu réactif offre une surface exposée au rayonnement par unité de longueur qui soit croissante entre le début et le bout de ligne, il est possible de jouer sur la géométrie du tube creux 780 notamment en prévoyant les variations suivantes, entre le début et le bout de ligne :

-    augmentation de la section, correspondant à un tube de plus en plus gros ; et/ou
-    diminution du diamètre, correspondant à un tube de plus en plus proche du premier conducteur 71 ; et/ou
-    diminution du pas, correspondant à des spires de plus en plus rapprochées, les spires du début de ligne devant être espacées.

Dans le mode de réalisation illustré aux figures 16, 18 et 19, le canal de circulation 78 est délimité d'une part par une rainure 783 en spirale ménagé sur la face externe d'un corps creux 784 entourant le premier conducteur 71, et d'autre part par la paroi externe 23. Le corps creux 784 est monté de façon étanche contre la paroi externe 23, de sorte que le milieu réactif circule uniquement dans la rainure 783. Le milieu réactif est introduit dans la rainure 783 via l'entrée 20, qui débouche directement dans la rainure 783, et en ressort via la sortie 21, qui débouche également directement dans la rainure 783. Le corps creux 784 est réalisé dans un matériau transparent au rayonnement électromagnétique, et peut être considéré comme partie de l'isolant 73, au même titre que le manchon 730 en matériau diélectrique décrit ci-avant en référence notamment aux figures 9b et 9c.

Pour faire varier l'interface de transfert entre la ligne de transmission à pertes 70 et le milieu réactif circulant dans la rainure 783, il est possible de jouer seul ou en combinaison sur les deux paramètres suivants :

-    géométrie du premier conducteur 71 ;
-    géométrie du corps creux 784, et plus particulièrement de la rainure, afin de contrôler la surface de milieu réactif exposée au rayonnement du premier conducteur 71, ce qui revient sensiblement au même que de jouer avec la géométrie du manchon 730 comme illustré en figure 9c.

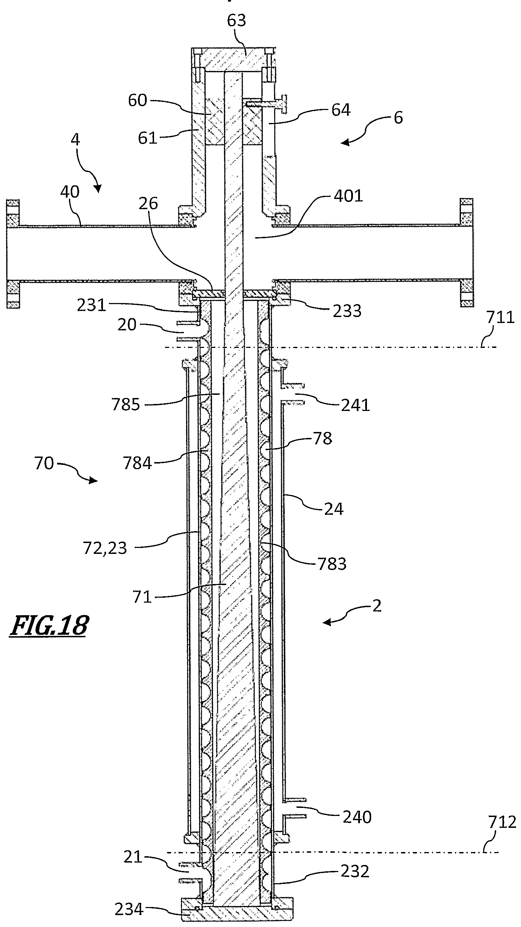

Comme illustré en figure 18, pour que le premier conducteur 71 offre une surface rayonnante par unité de longueur croissante, entre le début et le bout de ligne, ledit premier conducteur 71 présente une forme tronconique. Dans ce mode de réalisation, le corps creux 784 présente une cavité interne 785 de section cylindrique et dont le diamètre est sensiblement supérieur au diamètre du premier conducteur 71 au niveau de son extrémité libre. On peut bien entendu jouer sur l'isolation diélectrique entre le premier conducteur 71 et la rainure 783 en contrôlant les dimensions de la cavité interne 785 du corps creux 784, de sorte que ledit corps creux 784 enserre plus ou moins ledit premier conducteur 71.

Selon une caractéristique particulière, le corps creux 784 est mobile en rotation afin de pouvoir être entraîné en rotation dans le réacteur 2 autour de l'axe longitudinal de la ligne de transmission à pertes 70 ; ledit corps creux 784 avec sa rainure 783 fonctionnant ainsi selon le principe de la vis sans fin pour pouvoir convoyer un milieu réactif entre l'entrée 20 et la sortie 21 du réacteur 2. Un tel convoyage par rotation du corps creux 784 est particulièrement adapté pour un milieu réactif sous forme solide, comme par exemple par exemple du type granuleux ou pulvérulent.

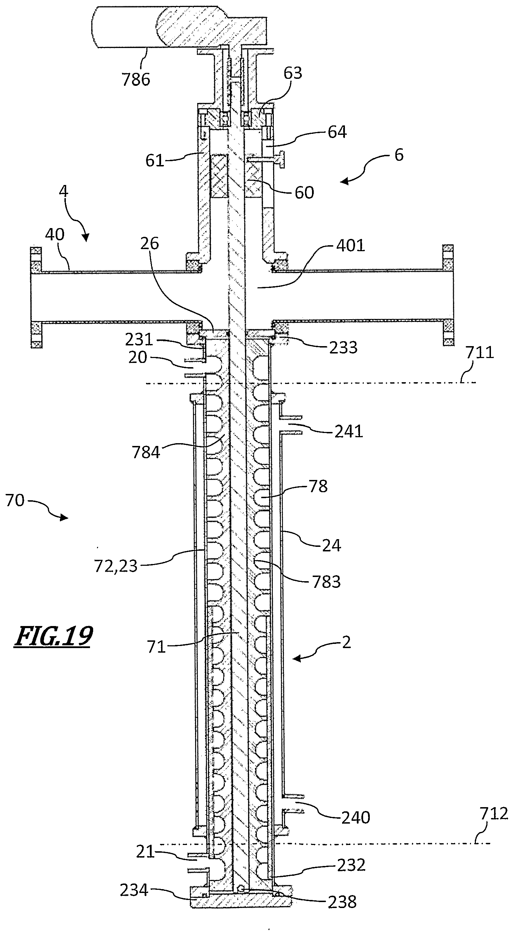

Comme illustré en figure 19, pour entraîner le corps creux 784 en rotation, il est possible de rendre solidaire en rotation le corps creux 784 et le premier conducteur 71 et d'entraîner en rotation ledit premier conducteur 71, par exemple au moyen d'un moteur rotatif 786 monté sur le manchon 61, et plus particulièrement sur sa paroi transverse d'extrémité 63. Dans ce cas, le premier conducteur 71 traverse ladite paroi transverse d'extrémité 63, dans laquelle il est monté à rotation notamment au moyen d'un roulement à billes, afin de coopérer avec le moteur rotatif 786. A l'autre extrémité du premier conducteur 71, ledit premier conducteur 71 peut être guidé en rotation au moyen d'un pion de centrage 238 saillant du couvercle 234 pour s'engager dans une cavité ménagée à cet effet dans cette extrémité du premier conducteur 71. Il est bien entendu envisageable que le moteur rotatif 786 soit disposé à cette autre extrémité du premier conducteur 71 qui traverserait alors le couvercle 234 de la même façon qu'il traverse la paroi transverse d'extrémité 63 sur la figure 19.

Pour rendre solidaire en rotation le corps creux 784 et le premier conducteur 71, par exemple de section cylindrique, il envisageable de monter sans jeu ledit corps creux 784 autour dudit premier conducteur, la cavité interne 785 du corps creux 784 est alors complètement remplie par le premier conducteur 71.

La rainure 783 illustrée en figure 18 est de largeur constante (correspondant à la dimension selon l'axe longitudinal du premier conducteur 71), de profondeur constante (correspondant à la dimension selon l'axe perpendiculaire au premier conducteur 71), et de pas constant ; le seul contrôle de l'interface de couplage entre la ligne de transmission à pertes 70 et le milieu réactif étant ici effectuée par la forme tronconique du premier conducteur 71.

Cependant, pour que le milieu réactif offre une surface exposée au rayonnement par unité de longueur qui soit croissante entre le début et le bout de ligne, il est possible de jouer sur la géométrie de la rainure 783 notamment en prévoyant les variations suivantes, entre le début et le bout de ligne :

- augmentation de la largeur de la rainure, correspondant à une rainure de plus en plus large ; et/ou
- augmentation de la profondeur de la rainure, correspondant à une rainure de plus en plus proche du premier conducteur 71 ; et/ou
- diminution du pas, correspondant à des spires de plus en plus rapprochées, les spires du début de rainures devant être espacées.

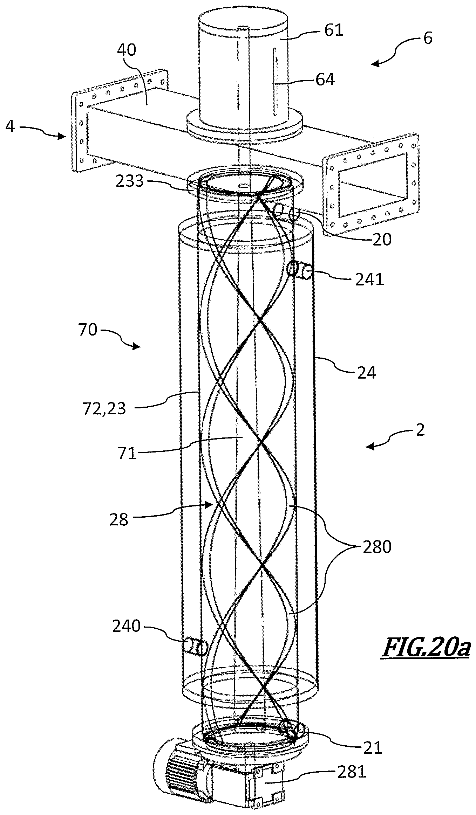

Les figures 20a à 20c illustrent des réacteurs 2 qui comprennent des moyens d'agitation 28 sous la forme d'hélices 280 ou pièces hélicoïdales animées d'un mouvement rotatif par un organe motorisé 281. Selon une forme particulière de l'invention, les hélices ou pièces hélicoïdales 280 présentent un axe de symétrie parallèle, voire confondue, avec l'axe longitudinal de la ligne de transmission à perte 70. Ainsi, les hélices s'étendent autour du premier conducteur 71 de la ligne de transmission à pertes 70, et elles sont centrées autour de ce premier conducteur 71. Les hélices 280 peuvent également présenter un diamètre externe sensiblement égale au diamètre interne du corps de réacteur 23 (ou paroi externe 23) tubulaire, afin de tourner dans ledit corps 23 avec un faible jeu par rapport à ce dernier. Les hélices 280 sont entraînées en rotation notamment au moyen d'un moteur rotatif 281 disposée à l'extrémité 232 du réacteur 2, à l'extérieur de celui-ci.

Les réacteurs 2 illustrés aux figures 20a à 20c ne comprennent pas de canal de circulation d'un milieu réactif tel que décrit ci-dessus ; ledit milieu réactif étant introduit au niveau de l'entrée 20 et extrait au niveau de la sortie 21, ce milieu réactif s'étendant complètement entre le premier conducteur 71 et le deuxième conducteur 72, c'est-à-dire la paroi externe 23 ou corps de réacteur.

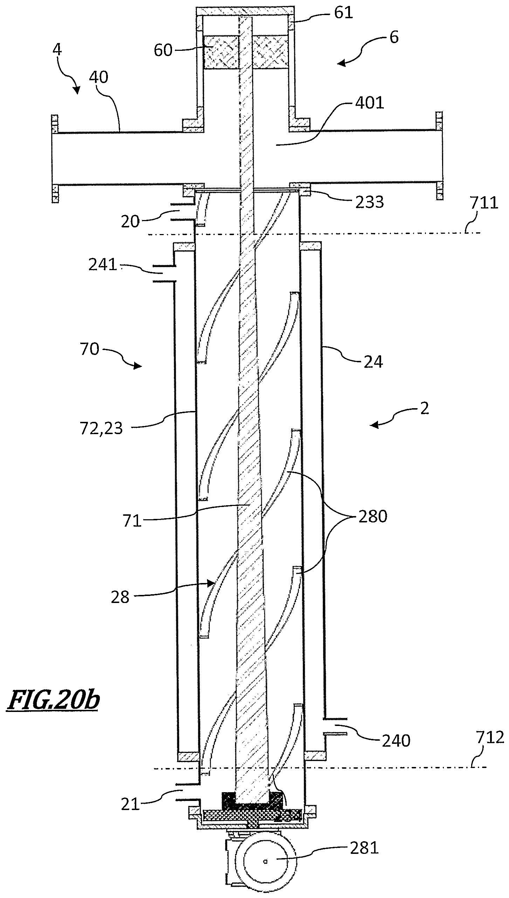

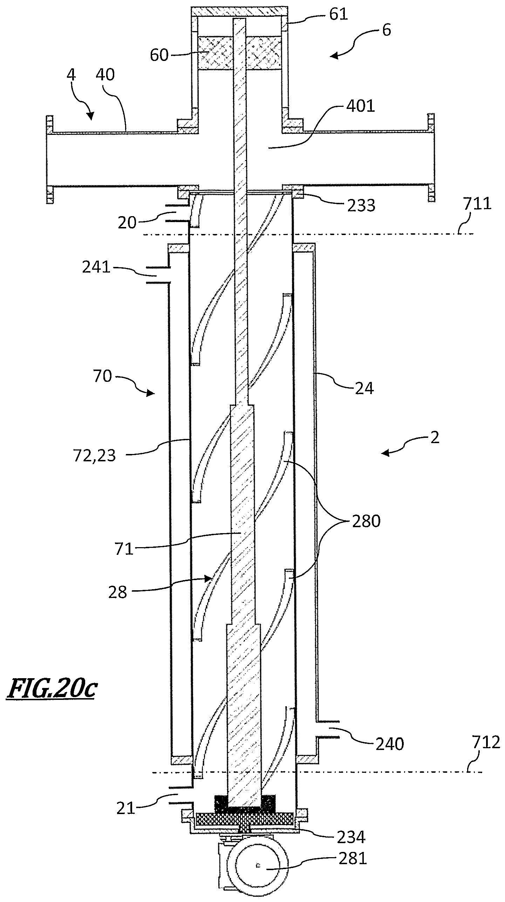

Pour faire varier l'interface de transfert entre la ligne de transmission à pertes 70 et le milieu réactif circulant dans le réacteur 2, il est possible de jouer uniquement sur la géométrie transversale du premier conducteur 71 : aux figures 20a et 20b, le premier conducteur 71 est de forme générale tronconique, avec une augmentation continue de la section du premier conducteur 71, et à la figure 20c, le premier conducteur 71 est de forme générale en escalier, avec une augmentation par palier de la section du premier conducteur 71.

Sur chacune des figures 17, 18, 19, 20b ou 20c, sont représentés une première 711 et une deuxième 712 sections transversales de la ligne de transmission à pertes 70, où l'interface de transfert entre ladite ligne de transmission à pertes 70 et le milieu réactif, et donc le couplage entre ladite ligne 70 et ledit milieu réactif, sont supérieurs dans le cas de la deuxième section transversale 712 par rapport à la première section transversale 711. Les différents moyens pour obtenir cette différence d'interface de transfert ou de couplage avec le milieu réactif ont été décrits ci-dessus, et consistent principalement à jouer sur la géométrie du premier conducteur 71 et/ou du canal de circulation 78 et/ou du deuxième conducteur 72 et/ou de l'isolant 73.

**Revendications**

1.  Dispositif d'application (7) d'énergie électromagnétique à un milieu réactif, ledit dispositif d'application (7) étant destiné à être couplé à un générateur (1) de rayonnement électromagnétique du type micro-ondes par l'intermédiaire de moyens de transmission dudit rayonnement comprenant un guide d'ondes (4), ledit dispositif d'application (7) comprenant au moins une ligne de transmission à pertes (70) présentant une interface de transfert de l'énergie électromagnétique vers le milieu réactif, ladite interface de transfert étant agencée de manière à assurer le long de ladite ligne de transmission à pertes (70) un profil prédéterminé de répartition de la densité d'énergie électromagnétique délivrée audit milieu par ladite ligne de transmission à pertes (70), en présentant les caractéristiques suivantes :

    (a) la ligne de transmission à pertes (70) comprend au moins :

- un premier conducteur (71) électrique destiné à être couplé d'une part au guide d'ondes (4) et d'autre part au milieu réactif afin de permettre l'application de l'énergie électromagnétique générée audit milieu réactif selon le profil prédéterminé de répartition de la densité d'énergie électromagnétique ;
- un deuxième conducteur (72) électrique disposé partiellement autour du premier conducteur (71) et destiné à s'étendre à l'intérieur d'un réacteur (2) dans lequel est disposé ledit milieu réactif ; et
- un isolant (73) diélectrique isolant au moins partiellement l'un de l'autre le premier et le second conducteurs (71, 72) et présentant des caractéristiques diélectriques adaptées, ledit isolant (73) enveloppant au moins partiellement le premier conducteur (71) et étant disposé entre le premier et le second conducteurs (71, 72) ;

(b) la ligne de transmission à pertes (70) présente :

- une première portion (701) de couplage avec le guide d'ondes (4), où le premier conducteur (71) est exposé et n'est donc pas entouré par le deuxième conducteur (72) et par l'isolant (73) ;
- une deuxième portion (702) de liaison entre le guide d'ondes (4) et le réacteur (2), où le premier conducteur (71) est complètement entouré par le deuxième conducteur (72) et par l'isolant (73) ;
- une troisième portion (703) pour l'application de l'énergie électromagnétique au milieu réactif, prévue pour s'étendre à l'intérieur du réacteur (2) et agencée de sorte que le milieu réactif est disposé au moins partiellement entre le premier (71) et le deuxième (72) conducteur, l'isolant (73) étant composé au moins en partie du milieu réactif ;

ledit dispositif d'application (7) étant **caractérisé en ce que** :

(c) la ligne de transmission à pertes (70) est conformée de sorte que le premier conducteur (71) présente une géométrie transversale variable le long de la ligne de transmission à pertes (70) et/ou l'isolant (73) comporte un manchon (730) en matériau diélectrique entourant ledit premier conducteur (71), ledit manchon (730) étant de géométrie transversale variable le long de la ligne de transmission à pertes (70), afin d'obtenir une interface de transfert variable entre le premier conducteur (71) et le milieu réactif.

2. Dispositif d'application selon la revendication 1, **caractérisé en ce que** l'interface de transfert de la ligne de transmission (70) est distincte entre au moins une première (711) et une deuxième (712) section transversale de ladite ligne (70), de l'énergie électromagnétique étant délivrée au milieu à chacune de ces sections transversales (711 ; 712), et **en ce que** l'interface de transfert de la ligne de transmission à pertes (70) varie de façon continue, notamment de façon régulière, ou de façon discontinue, notamment par paliers, entre la première (711) et la deuxième (712) section transversale, avec notamment une géométrie transversale variable sur toute la longueur de la ligne (70).

3. Dispositif d'application selon l'une quelconque des revendications précédentes, **caractérisé en ce que** le deuxième conducteur (72) forme la paroi (23) du réacteur (2) à l'intérieur duquel est disposé ledit milieu réactif.

4. Dispositif d'application selon l'une quelconque des revendications précédentes, **caractérisé en ce qu'**il comprend au moins un canal de circulation (78) du milieu réactif entourant le premier conducteur (71) de ladite ligne de transmission à pertes (70) sur toute ou partie de ladite ligne (70), ledit canal de circulation (78) étant au moins partiellement transparent au rayonnement électromagnétique.

5. Dispositif d'application selon la revendication 4, **caractérisé en ce que** le canal de circulation (78) soit comprend au moins un tube creux (780) en forme générale de spirale, soit est délimité en partie par une rainure (783) en spirale ménagée sur la face externe d'un corps creux (784) entourant le premier conducteur (71), la géométrie du canal de circulation (78) étant de préférence telle que :

- le pas dudit tube creux (780) ou de ladite rainure (783) varie le long de la ligne de transmission à pertes (70), notamment dans le sens d'une réduction du pas en direction du bout de ligne, et/ou
- le diamètre dudit tube creux (780) ou la profondeur de la rainure (783) varie le long de ladite ligne (70), notamment dans le sens d'une réduction dudit diamètre ou de ladite profondeur en direction du bout de ligne, et/ou
- la section dudit tube creux (780) ou la largeur de la rainure (783) varie le long de ladite ligne (70), notamment dans le sens d'une augmentation de ladite section en direction du bout de ligne.

6. Ensemble comprenant un dispositif d'application (7) d'énergie électromagnétique à un milieu réactif et un réacteur (2) à l'intérieur duquel est disposé ledit milieu réactif, **caractérisé en ce que** ledit dispositif d'application (7) s'étendant au moins partiellement à l'intérieur dudit réacteur (2) est conforme à l'une quelconque des revendications précédentes.

7. Ensemble selon la revendication 6, **caractérisé en ce qu'**il comprend des moyens d'agitation (28) dudit milieu réactif (2) à l'intérieur dudit réacteur (2), notamment du type comprenant au moins une hélice (280) disposée dans ledit réacteur (2) et mobile en rotation.

8. Ensemble selon les revendications 6 ou 7, **caractérisé en ce qu'**il comprend des moyens de régulation (24) de la température dudit milieu, notamment formés d'une double enveloppe entourant au moins partiellement ledit réacteur (2) et à l'intérieur de laquelle circule un fluide de refroidissement ou de réchauffage.

9. Ensemble selon l'une quelconque des revendications 6 à 8, **caractérisé en ce qu'**il comprend des moyens de mise sous pression de ladite cavité (22).

10. Appareil de traitement par rayonnement électromagnétique d'un milieu réactif comprenant :

   - un générateur (1) de rayonnement électromagnétique du type micro-ondes,
   - des moyens de transmission dudit rayonnement électromagnétique comprenant un guide d'ondes (4),
   - un ensemble conforme à l'une quelconque des revendications 6 à 9, où le dispositif d'application (7) est couplé audit générateur (1) par l'intermédiaire du guide d'ondes (4), où le guide d'ondes (4) est en communication avec une cavité de couplage (401) à l'intérieur de laquelle s'étend le premier conducteur (71) de la première portion (701) de la ligne de transmission à pertes (7) afin de permettre le couplage entre ledit premier conducteur (71) et ledit guide d'ondes (4), et
   - des moyens d'adaptation (6 ; 8 ; 800) des impédances entre le générateur (1), les moyens de transmission (4) et le dispositif d'application (7).

11. Appareil selon la revendication 10, **caractérisé en ce qu'**il comprend un manchon creux (61) délimitant un espace (62) à l'intérieur duquel est mobile en translation un piston de court-circuit (60), ledit espace (62) étant attenant à ladite cavité de couplage (401), ledit piston de court-circuit (60) coulissant autour de l'extrémité du premier conducteur (71) opposée au réacteur (2), **en ce que** les moyens d'adaptation (8) comprennent un premier organe d'adaptation (81), tel qu'un piston de court-circuit, mobile en translation dans le guide d'ondes (4), et un deuxième organe d'adaptation (82), tel qu'un iris de couplage variable, également mobile en translation dans le guide d'ondes (4), et **en ce que** les premier (81) et deuxième (82) organes d'adaptation sont disposés dans le guide d'onde (4) de part et d'autre dudit réacteur (2).

12. Utilisation d'un appareil selon l'une quelconque des revendications 10 et 11, en tant qu'appareil de traitement thermique d'un milieu réactif pour réaliser des réactions chimiques données par application d'une énergie électromagnétique selon un profil de répartition de la densité d'énergie électromagnétique le long de la ligne de transmission à pertes, ledit profil étant choisi en fonction des réactions chimiques souhaitées, cet appareil constituant notamment un appareil d'extraction de substances d'origines biologiques, notamment des substances d'origines végétales ou animales ou de micro-organismes, par application d'une énergie électromagnétique à un milieu réactif contenant des matériaux d'origines biologiques, notamment d'origines végétales ou animales ou de micro-organismes, en suspension dans au moins un solvant.

**Patentansprüche**

1. Vorrichtung zum Anwenden (7) von elektromagnetischer Energie auf ein reaktives Medium, wobei die Vorrichtung zum Anwenden (7) dazu bestimmt ist, an einen Generator (1) für elektromagnetische Strahlung in der Art von Mikrowellen anhand von Übertragungsmitteln für die Strahlung gekoppelt zu werden, einen Wellenleiter (4) umfassend, wobei die Vorrichtung zum Anwenden (7) mindestens eine verlustbehaftete Übertragungsleitung (70) umfasst, die eine Transferschnittstelle für die elektromagnetische Energie auf ein reaktives Medium aufweist, wobei die Transferschnittstelle derart angeordnet ist, um entlang der verlustbehafteten Übertragungsleitung (70) für ein vorbestimmtes Profil zum Verteilen der elektromagnetischen Energiedichte zu sorgen, welche dem Medium durch die verlustbehaftete Übertragungsleitung (70) zugeführt wird, die folgenden Eigenschaften aufweisend:

   (a) die verlustbehaftete Übertragungsleitung (70) umfasst mindestens:

      - einen ersten elektrischen Leiter (71), der dazu bestimmt ist, einerseits an den Wellenleiter (4), und andererseits an das reaktive Medium gekoppelt zu werden, um die Anwendung der erzeugten elektromagnetischen Energie auf das reaktive Medium entsprechend dem vorbestimmten Profil zum Verteilen der elektromagnetischen Energiedichte zu ermöglichen;

- einen zweiten elektrischen Leiter (72), der teilweise um den ersten elektrischen Leiter (71) herum angeordnet ist, und dazu bestimmt ist, sich im Inneren eines Reaktors (2) zu erstrecken, in dem das reaktive Medium angeordnet ist; und

- eine dielektrische Isolierung (73), welche mindestens teilweise den einen von dem anderen des ersten und zweiten Leiters (71, 72) isoliert, und geeignete dielektrische Eigenschaften aufweist, wobei die Isolierung (73) mindestens teilweise den ersten Leiter (71) einhüllt und zwischen dem ersten und zweiten Leiter (71, 72) angeordnet ist;

(b) die verlustbehaftete Übertragungsleitung (70) weist auf:

- einen ersten Kopplungsabschnitt (701) mit dem Wellenleiter (4), wo der erste Leiter (71) freiliegend ist, und somit nicht von dem zweiten Leiter (72) und von der Isolierung (73) umgeben ist;
- einen zweiten Verbindungsabschnitt (702) zwischen dem Wellenleiter (4) und dem Reaktor (2), wo der erste Leiter (71) vollständig von dem zweiten Leiter (72) und von der Isolierung (73) umgeben ist;
- einen dritten Abschnitt (703) zum Anwenden der elektromagnetischen Energie auf das reaktive Medium, dafür vorgesehen, um sich im Inneren des Reaktors (2) zu erstrecken und derart angeordnet, dass das reaktive Medium mindestens teilweise zwischen dem ersten (71) und dem zweiten (72) Leiter angeordnet ist, wobei sich die Isolierung (73) mindestens zum Teil aus dem reaktiven Medium zusammensetzt;

wobei die Vorrichtung zum Anwenden (7) **dadurch gekennzeichnet ist, dass**:

(c) die verlustbehaftete Übertragungsleitung (70) derart ausgeformt ist, dass der erste Leiter (71) eine variable Querschnittsgeometrie entlang der verlustbehafteten Übertragungsleitung (70) aufweist, und/oder die Isolierung (73) eine Muffe (730) aus einem dielektrischen Material beinhaltet, welche den ersten Leiter (71) umgibt, wobei die Muffe (730) von einer variablen Querschnittsgeometrie entlang der verlustbehafteten Übertragungsleitung (70) ist, um eine variable Transferschnittstelle zwischen dem ersten Leiter (71) und dem reaktiven Medium zu erhalten.

2. Vorrichtung zum Anwenden nach Anspruch 1, **da-**

**durch gekennzeichnet, dass** sich die Transferschnittstelle der Übertragungsleitung (70) zwischen mindestens einem ersten (711) und einem zweiten (712) Querschnitt von der Leitung (70) unterscheidet, wobei die elektromagnetische Energie dem Medium in jedem dieser Querschnitte (711; 712) zugeführt wird, und dadurch, dass die Transferschnittstelle der verlustbehafteten Übertragungsleitung (70) kontinuierlich, im Speziellen regelmäßig, oder diskontinuierlich, im Speziellen stufenweise, zwischen dem ersten (711) und dem zweiten (712) Querschnitt variiert, im Speziellen mit einer variablen Querschnittsgeometrie über die gesamte Länge der Leitung (70).

3. Vorrichtung zum Anwenden nach einem der vorstehenden Ansprüche, **dadurch gekennzeichnet, dass** der zweite Leiter (72) die Wand (23) des Reaktors (2) bildet, im Inneren dessen das reaktive Medium angeordnet ist.

4. Vorrichtung zum Anwenden nach einem der vorstehenden Ansprüche, **dadurch gekennzeichnet, dass** sie mindestens einen Zirkulationskanal (78) des reaktiven Mediums umfasst, der den ersten Leiter (71) der verlustbehafteten Übertragungsleitung (70) über die gesamte Leitung (70) hinweg oder einen Teil davon umgibt, wobei der Zirkulationskanal (78) mindestens teilweise transparent für elektromagnetische Strahlung ist.

5. Vorrichtung zum Anwenden nach Anspruch 4, **dadurch gekennzeichnet, dass** der Zirkulationskanal (78) entweder mindestens eine hohle Röhre (780) in einer allgemeinen Spiralform umfasst, oder teilweise durch eine Nut (783) in Spiralform eingegrenzt wird, die an der Außenseite eines Hohlkörpers (784) angebracht ist, der den ersten Leiter (71) umgibt, wobei die Geometrie des Zirkulationskanals (78) vorzugsweise derart ist, dass:

- die Steigung der hohlen Röhre (780) oder der Nut (783) entlang der verlustbehafteten Übertragungsleitung (70) im Speziellen im Sinne einer Verringerung der Steigung in Richtung des Endes der Leitung variiert, und/ oder
- der Durchmesser der hohlen Röhre (780) oder die Tiefe der Nut (783) entlang der Leitung (70) im Speziellen im Sinne einer Verringerung des Durchmessers oder der Tiefe in Richtung des Endes der Leitung variiert, und/ oder
- der Querschnitt der hohlen Röhre (780) oder die Breite der Nut (783) entlang der Leitung (70) im Speziellen im Sinne einer Vergrößerung des Querschnitts in Richtung des Endes der Leitung variiert.

6. Einheit, umfassend eine Vorrichtung zum Anwenden (7) von elektromagnetischer Energie auf ein reaktives Medium und einen Reaktor (2), im Inneren dessen das reaktive Medium angeordnet ist, **dadurch gekennzeichnet, dass** die Vorrichtung zum Anwenden (7), die sich mindestens teilweise im Inneren des Reaktors (2) erstreckt, einem der vorstehenden Ansprüche entspricht.

7. Einheit nach Anspruch 6, **dadurch gekennzeichnet, dass** sie Mittel zum Rühren (28) des reaktiven Mediums (2) im Inneren des Reaktors (2) umfasst, im Speziellen in der Art, mindestens eine Schaufel (280) umfassend, die in dem Reaktor (2) angeordnet und drehbeweglich ist.

8. Einheit nach den Ansprüchen 6 oder 7, **dadurch gekennzeichnet, dass** sie Mittel zum Regulieren (24) der Temperatur des Mediums umfasst, die im Speziellen aus einer Doppelhülle gebildet sind, die mindestens teilweise den Reaktor (2) umgibt und im Inneren derer eine Flüssigkeit zum Kühlen oder zum Aufheizen strömt.

9. Einheit nach einem der Ansprüche 6 bis 8, **dadurch gekennzeichnet, dass** sie Mittel zum Beaufschlagen mit Druck des Hohlraumes (22) umfasst.

10. Gerät zur Behandlung eines reaktiven Mediums durch elektromagnetische Strahlung, umfassend:

   - einen Generator (1) für elektromagnetische Strahlung in der Art von Mikrowellen,
   - Mittel zum Übertragen der elektromagnetischen Strahlung, Wellenleiter (4) umfassend,
   - eine Einheit nach einem der Ansprüche 6 bis 9, wo die Vorrichtung zum Anwenden (7) über den Wellenleiter (4) an den Generator (1) gekoppelt ist, wo der Wellenleiter (4) in Verbindung mit einem Kopplungshohlraum (401) ist, im Inneren dessen sich der erste Leiter (71) von dem ersten Abschnitt (701) der verlustbehafteten Übertragungsleitung (7) erstreckt, um die Kopplung zwischen dem ersten Leiter (71) und dem Wellenleiter (4) zu ermöglichen, und
   - Mittel zum Anpassen (6; 8; 800) der Impedanzen zwischen dem Generator (1), den Übertragungsmitteln (4) und der die Vorrichtung zum Anwenden (7).

11. Gerät nach Anspruch 10, **dadurch gekennzeichnet, dass** es eine Hohlmuffe (61) umfasst, die einen Raum (62) eingrenzt, im Inneren dessen ein Kurzschlusskolben (60) translationsbeweglich ist, wobei der Raum (62) an den Kopplungshohlraum (401) angrenzend ist, wobei der Kurzschlusskolben (60) um das Ende des ersten Leiters (71) herum, gegenüber dem Reaktor (2) gleitend ist, dadurch, dass die Mittel zum Anpassen (8) ein erstes in dem Wellenleiter (4) translationsbewegliches Anpassungsorgan (81), wie einen Kurzschlusskolben umfassen, und ein zweites Anpassungsorgan (82), wie eine variable Kopplungsirisblende, ebenfalls in dem Wellenleiter (4) translationsbeweglich, und dadurch, dass die ersten (81) und zweiten (82) Anpassungsorgane in dem Wellenleiter (4) beiderseits des Reaktors (2) angeordnet sind.

12. Verwendung eines Gerätes nach einem der Ansprüche 10 und 11, als Gerät zur Wärmebehandlung eines reaktiven Mediums zum Durchführen von gegeben chemischen Reaktionen, durch die Anwendung einer elektromagnetischen Energie entsprechend einem Dichteverteilungsprofil der elektromagnetischen Energie entlang der verlustbehafteten Übertragungsleitung, wobei das Profil in Abhängigkeit von den gewünschten chemischen Reaktionen ausgewählt wird, wobei dieses Gerät im Speziellen ein Gerät zum Extrahieren von Substanzen biologischen Ursprungs, im Speziellen von Substanzen pflanzlichen oder tierischen Ursprungs oder von Mikroorganismen darstellt, durch Anwenden einer elektromagnetischen Energie auf ein reaktives Medium, welches Materialien biologischen Ursprungs, im Speziellen pflanzlichen oder tierischen Ursprungs oder von Mikroorganismen in mindestens einem Lösungsmittel suspendiert, enthält.

## Claims

1. An application device (7) for applying electromagnetic energy to a reactive medium, said application device (7) being intended to be coupled with a microwave electromagnetic radiation generator (1) via means for transmitting said radiation comprising a wave guide (4), said application device comprising at least one lossy transmission line (70) having an interface for transferring electromagnetic energy to the reactive medium, said transfer interface being arranged so as to ensure along said lossy transmission line (70) a predetermined distribution profile of the electromagnetic energy density delivered to said medium through said lossy transmission line (70), by having the following features:

   (a) the lossy transmission line (70) comprises at least:

      - a first electric conductor (71) intended to be coupled with the generator (1) on the one hand and with the reactive medium on the other hand in order to allow the generated electromagnetic energy to be applied to said reactive medium according to the predetermined distribution profile of the electromagnetic energy density,

- a second electric conductor (72) positioned around the first conductor (71) and intended to extend into the interior of a reactor (2) in which said reactive medium is positioned ; and

- a dielectric insulator (73) insulating at least partly the first and second conductors (71, 72) from each other and having adapted dielectric characteristic, said insulator (73) encasing at least partly the first conductor (71) and positioned between the first and second conductors (71, 72);

(b) the lossy transmission line (70) has:

- a first portion (701) for coupling with the wave guide (4), wherein the first conductor (71) is exposed and is therefore not surrounded by the second conductor (72) and by the insulator (73);

- a second portion (702) for connection between the wave guide (4) and the reactor (2), wherein the first conductor (71) is completely surrounded by the second conductor (72) and by the insulator (73); and

- a third portion (703) for applying electromagnetic energy to the reactive medium, intended to extend inside the reactor (2) and arranged so that the reactive medium is at least partly between the first (71) and the second (72) conductors, said insulator (73) being composed at least partly by the reactive medium;

said application device (7) being **characterized in that**:

(c) the lossy transmission line (70) is shaped such as the first conductor (71) has a variable transverse geometry along the lossy transmission line (70) and/or the insulator (73) includes a sleeve (730) in a dielectric material surrounding said first conductor (71), said sleeve (730) being of variable transverse geometry along the lossy transmission line (70) in order to obtain a variable transfer interface between the first conductor (71) and the reactive medium .

2. The application device according to claim 1, **characterized in that** the transfer interface of the transmission line (70) is distinct between at least a first (711) and a second (712) cross-sections of said line (70), electromagnetic energy being delivered to the medium at each of these cross-sections (711; 712) and **in that** the transfer interface of the lossy transmission line (70) varies continuously, notably regularly, or discontinuously, notably stepwise, between the first (711) and the second (712) cross-sections, with notably a variable transverse geometry over the whole length of the line (70).

3. The application device according to any of the preceding claims, **characterized in that** the second conductor (72) forms the wall (23) of the reactor (2) inside which said reactive medium is positioned.

4. The application device according to any of the preceding claims, **characterized in that** it comprises at least one circulation channel (78) for the reactive medium surrounding the first conductor (71) of said lossy transmission line (70) on all or part of said line (70), said circulation channel (78) being at least partly transparent to electromagnetic radiation.

5. The application device according to claim 4, **characterized in that** the circulation channel (78) either comprises at least one hollow tube (780) with a general spiral shape, or is partly delimited by a spiral groove (783) made on the external face of a hollow body (784) surrounding the first conductor (71), the geometry of the circulation channel (78) being preferably such that:

- the pitch of said hollow tube (780) or of said groove (783) varies along the lossy transmission line (70) notably in the direction of a reduction in the pitch towards the end of the line, and/or

- the diameter of said hollow tube (780) or the depth of the groove (783) varies along said line (70), notably in the direction of a reduction in said diameter or in said depth towards the end of the line, and/or

- the section of said hollow tube (780) or the width of the groove (783) varies along said line (70), notably in the direction of an increase in said section towards the end of the line.

6. An assembly comprising an application device (7) for applying electromagnetic energy to a reactive medium and a reactor (2) inside which said reactive medium is positioned, **characterized in that** said application device (7) extending at least partly into the interior of said reactor (2) is in accordance with any of the preceding claims.

7. The assembly according to claim 6, **characterized in that** it comprises means (28) for stirring said reactive medium (2) inside said reactor (2), notably of the type comprising at least one propeller (280) positioned in said reactor (2) and rotationally mobile.

8. The assembly according to claims 6 or 7, **characterized in that** it comprises means (24) for controlling the temperature of said medium, notably formed with a jacket at least partly surrounding said reactor (2) and in the interior of which a cooling or heating fluid circulates.

9. The assembly according to any of claims 6 to 8, **characterized in that** it comprises means for pressurizing said cavity (22).

10. A device for treating by electromagnetic radiation a reactive medium comprising:

- a microwave electromagnetic radiation generator (1),
- means for transmitting said electromagnetic radiation comprising a wave guide (4),
- an assembly according to any of claims 6 to 9, wherein the application device (7) is coupled with said generator (1) via said wave guide (4), wherein the wave guide (4) is in communication with a coupling cavity (401) in the interior of which the first conductor (71) of the first portion (701) of the lossy transmission line (70) extends in order to allow coupling between said first conductor (71) and said wave guide (4); and
- matching means (6; 8; 800) for matching the impedances between the generator (1), the transmission means (4) and the application device (7).

11. The device according to claim 10, **characterized in that** it comprises a hollow sleeve (61) delimiting a space (62) inside which a short-circuit piston (60) is translationally mobile, said space (62) being contiguous with said coupling cavity (401), said short-circuit piston (60) sliding around the end of the first conductor (71) opposite to the reactor (2), **in that** the adaptation means (8) comprise a first adaptation member (81), such as a short-circuit piston, translationally mobile in the wave guide (4) and a second adaptation member (82), such as a variable coupling iris, also translationally mobile in the wave guide (4) and **in that** the first (81) and the second (82) adaptation members are positioned in the wave guide (4) on either side of said reactor (2).

12. Use of a device according to any of claims 10 and 11, as a device for heat treatment of a reactive medium in order to produce given chemical reactions by applying electromagnetic energy according to a distribution profile of the electromagnetic energy density along the lossy transmission line, said profile being selected depending on the desired chemical reactions, this device notably forming a device for extracting substances of biological origins, notably substances of plant or animal origins, or from microorganisms, by applying electromagnetic energy to a reactive medium containing materials of biological origins, notably plant or animal origins or from microorganisms, in suspension in at least one solvent.

*FIG.1a*

*FIG.1b*

*FIG.2*

*FIG.3a*

*FIG.3b*

*FIG.4a*

*FIG.4b*

*FIG.4c*

*FIG.4d*

*FIG.4e*

*FIG.5a*

*FIG.5b*

**FIG.6e**

**FIG.6a**

**FIG.6b**

**FIG.6c**

**FIG.6d**

**FIG.7a**

**FIG.8a**

**FIG.8b**

**FIG.7b**

**FIG.8c**

**FIG.9a**

*FIG.9b*

*FIG.9c*

_FIG.10_

*FIG.11a*

*FIG.11b*

*FIG.12*

*FIG.13a*

*FIG.13b*

*FIG.14*

**FIG.15a**

**FIG.15b**

*FIG.15c*

*FIG.16*

FIG.17

**FIG.18**

*FIG.19*

*FIG.20a*

*FIG.20b*

**_FIG.20c_**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0329338 A
- DE 102004057851 A1
- WO 0015008 A
- WO 2006067579 A
- US 20060011563 A1